(19) Europäisches Patentamt / European Patent Office / Office européen des brevets

(11) **EP 4 778 719 A1**

(12) **EUROPEAN PATENT APPLICATION**
published in accordance with Art. 153(4) EPC

(43) Date of publication:
**22.07.2026 Bulletin 2026/30**

(21) Application number: 24865370.1

(22) Date of filing: 06.09.2024

(51) International Patent Classification (IPC):
**B32B 27/00** (2006.01)    **B32B 7/023** (2019.01)
**B32B 27/36** (2006.01)    **C03C 27/12** (2006.01)
**G02B 5/08** (2006.01)    **G02B 5/26** (2006.01)

(52) Cooperative Patent Classification (CPC):
**B32B 7/023; B32B 17/00; B32B 27/00;
B32B 27/36; G02B 5/08; G02B 5/26**

(86) International application number:
**PCT/JP2024/032001**

(87) International publication number:
**WO 2025/057870 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023 JP 2023149797**

(71) Applicant: **Toray Industries, Inc.
Tokyo 103-8666 (JP)**

(72) Inventors:
• **MASUDA, Yoshihiro**
  **Otsu-shi, Shiga 520-8558 (JP)**
• **SAWAMOTO, Keiko**
  **Otsu-shi, Shiga 520-8558 (JP)**
• **UTO, Takayuki**
  **Otsu-shi, Shiga 520-8558 (JP)**

(74) Representative: **Mewburn Ellis LLP
Aurora Building
Counterslip
Bristol BS1 6BX (GB)**

(54) **LAMINATED FILM**

(57)    A laminated film having a configuration in which 51 or more layers of two or more different types of thermoplastic resin layers are regularly laminated, wherein when a highest glass transition temperature determined by differential scanning calorimetry is defined as TA, and a shrinkage onset temperature determined from a TMA curve in a primary orientation direction is defined as TX, the TX is 5°C or more and 30°C or less lower than the TA. Provided is a laminated film capable of reducing wavy strains and color unevenness caused by hot-press molding in a molded article in which an interlayer and a support are arranged on at least one surface of the laminated film, and improving outer appearance and designability when formed into a molded body.

EP 4 778 719 A1

**Description**

FIELD OF THE INVENTION

The present invention relates to a laminated film.

BACKGROUND ART

Laminated films that selectively reflect light of a specific wavelength by utilizing an optical interference phenomenon that is exhibited by alternately laminating two or more materials having different optical properties at a layer thickness on the level of the wavelength of light are known. Since such a laminated film can be provided with various properties by adjusting the refractive index, the number of layers, the thickness of each layer, etc. of the materials used, it is used, for example, in applications such as cold mirrors, half mirrors, laser mirrors, dichroic filters, heat-ray reflective films, near-infrared cut filters, monochromatic filters, and polarizing reflective films.

A molded body obtained by heating and pressure laminating such a laminated film onto a hard support is used for decorative materials such as decorative panels, various home appliances, building members, automotive parts, and the like. Among these, in recent years, heat ray-shielding glass that can suppress the inflow of heat from the outside in the summer, especially heat from sunlight, has attracted attention as window glass for vehicles such as automobiles and trains, and buildings, due to carbon dioxide emission regulations for environmental protection.

Examples of such heat ray-shielding glass include one in which a heat-ray absorbing material is contained in an interlayer used in glass or laminated glass to block heat rays (e.g., Patent Literature 1), one in which a film that blocks heat rays by reflecting them, formed by sputtering or the like a metal film, is laminated to glass (e.g., Patent Literature 2), and one in which a laminated film in which polymers having different refractive indices are alternately laminated is inserted between glass and an interlayer to block heat rays by reflecting them (e.g., Patent Literature 3).

However, in the method of Patent Literature 1, there is a problem that sunlight incident from the outside is converted into heat energy, and the heat is radiated into the room, thereby lowering the heat ray-shielding efficiency. In addition, in this method, absorbing heat rays partially raises the glass temperature, and the glass body may be damaged due to the difference in temperature from the outside air. In the method of Patent Literature 2, it is easy to color because it reflects not only heat rays but also visible light, and also, since it shields electromagnetic waves, it may adversely affect the use of communication equipment inside. On the other hand, the laminated film of Patent Literature 3 can selectively reflect light in the near-infrared range that contributes to a rise in temperature and improve the heat ray-shielding performance while maintaining visible light transmittance, because the wavelength to be reflected can be selected by controlling its layer thickness. Furthermore, since it does not contain a component that blocks radio waves such as metal, it maintains excellent radio wave transmission.

Furthermore, when a laminated film such as the one described in Patent Literature 3 is obtained by a melt extrusion method, for reasons such as transparency, heat resistance, weather resistance, chemical resistance, strength, and dimensional stability, a polyester resin such as polyethylene terephthalate (PET) or polyethylene naphthalate (PEN) is used as the main component of one resin layer, and a thermoplastic resin having optical properties different from those of the polyester resin (e.g., copolymerized polyester) is used for the other resin layer (e.g., Patent Literatures 4 to 6). In particular, when polyethylene naphthalate is used as the main component of one resin layer, the difference in refractive index with a low-refractive-index copolymerized polyester can be increased, so that a laminated film having high reflectance can be obtained.

PRIOR ART REFERENCES

Patent Literature

Patent Literature 1: JP 2010-17854 A
Patent Literature 2: JP 2001-310407 A
Patent Literature 3: WO 2005/040868
Patent Literature 4: JP 2005-59332 A
Patent Literature 5: JP 2004-249587 A
Patent Literature 6: WO 2013/137288

SUMMARY OF THE INVENTION

PROBLEMS WHICH THE INVENTION TRIES TO SOLVE

Such heat ray-shielding glass is often used in places exposed to human eyes, such as window glass for vehicles and buildings, so the outer appearance is also an important factor. However, in the aspect of attaching the laminated film of Patent Literature 3, there is a problem that wavy strains occur in the laminated film during molding due to uneven pressing caused by thickness variation of the interlayer used for lamination with the support, or a difference in heat shrinkage stress with the interlayer, thereby impairing the outer appearance. In particular, since such a laminated film utilizes an interference reflection phenomenon by controlling the layer thickness, a change in layer thickness due to wavy strains makes color unevenness and optical defects in the film surface easily noticeable. Furthermore, in such a laminated film, it is also a problem that wrinkles are likely to occur when laminated with the support and the interlayer and then molded. This problem mainly occurs at the edges of the molded body, caused by the inability of the laminated film to follow the shape of the support during molding, or a difference in heat shrinkage rate with the interlayer.

In addition, as described in Patent Literatures 4 and 5, when a laminated film is formed of a layer mainly composed of polyethylene naphthalate and a layer of a relatively low-refractive-index copolymerized polyester, the layer mainly composed of polyethylene naphthalate is relatively high in rigidity, making it difficult to deform, and thus difficult to apply to uses where the laminated film is deformed and processed. For example, there is a problem that it is difficult to apply as a final product because wrinkles and wavy strains may occur when the support, the interlayer, and the laminated film are laminated and molded.

On the other hand, as described in Patent Literature 6, when a laminated film is formed of a layer mainly composed of polyethylene terephthalate and a layer of a relatively low-refractive-index copolymerized polyester, the layer is less rigid than polyethylene naphthalate, making it easy to deform, and thus easy to apply to uses where the laminated film is deformed and processed. However, since polyethylene terephthalate has a lower refractive index than polyethylene naphthalate, the reflectance of the laminated film is low, resulting in inferior performance as a final product.

An object of the present invention is to solve the above problems and to provide a laminated film that can reduce the occurrence of wavy strains and color unevenness due to molding involving heating and pressure, and improve the outer appearance and design when formed into a molded body, in a molded article in which an interlayer and a support are arranged on at least one surface of the laminated film.

MEANS FOR SOLVING THE PROBLEM

To overcome the above-described problems, the present invention has the following constitution:

[1] A laminated film having a configuration in which 51 or more layers of two or more different types of thermoplastic resin layers are regularly laminated, wherein when a highest glass transition temperature determined by differential scanning calorimetry (DSC measurement) is defined as TA, and a shrinkage onset temperature determined from a TMA curve in a primary orientation direction is defined as TX, the TX is lower than the TA by 5°C or more and 30°C or less.

[2] The laminated film according to [1], wherein under an atmosphere of the TA, a heat shrinkage rate in at least one of the primary orientation direction and a direction orthogonal to the primary orientation direction is 0.5% or more and 1.2% or less.

[3] The laminated film according to [1] or [2], wherein under an atmosphere of 150°C, a heat shrinkage rate in at least one of the primary orientation direction and a direction orthogonal to the primary orientation direction is 1.5% or more and less than 4.0%.

[4] The laminated film according to any of [1] to [3], comprising a layer containing, as a main component, a polyester having a naphthalene dicarboxylic acid unit as a main structural unit.

[5] The laminated film according to any of [1] to [4], wherein when a shrinkage onset temperature determined from a TMA curve in a direction orthogonal to the primary orientation direction is defined as TY, difference between the TY and the TX is 0°C or more and 10°C or less.

[6] The laminated film according to any of [1] to [5], wherein the TY is lower than the TA by 5°C or more and 30°C or less.

[7] The laminated film according to any of [1] to [6], wherein when average value of heat shrinkage rates at 150°C is defined as S(150) and average value of heat shrinkage rates at the TA is defined as S(TA), S(150)/S(TA) is 1.5 or more and 5.0 or less.

[8] The laminated film according to any of [1] to [7], wherein when average value of heat shrinkage rates at 120°C is defined as S(120) and average value of heat shrinkage rates at the TA is defined as S(TA), S(120)/S(TA) is 1.5 or more and 5.0 or less.

[9] The laminated film according to any of [1] to [8], comprising a reflection band having a width of 100 nm or more where a reflectance is 30% or more when light is incident on a film surface under conditions of an incident angle of 10° and a wavelength of 800 to 2000 nm.

[10] The laminated film according to any of [1] to [9], wherein a P-wave average reflectance at a wavelength of 400 to 700 nm at an incident angle of 60° is 10% or more and 50% or less.

[11] The laminated film according to any of [1] to [10], wherein an internal haze is 0.5% or less.

[12] The laminated film according to any of [1] to [11], which is a film for laminated glass.

[13] A laminate comprising a support 1, an intermediate layer 1, the laminated film according to [1] or [2], an intermediate layer 2, and a support 2 in this order.

[14] A laminated glass, wherein the support 1 and the support 2 in the laminate according to [13] are both made of glass.

EFFECTS OF THE INVENTION

According to the present invention, it is possible to provide a laminated film capable of reducing the occurrence of wavy strains and color unevenness due to molding accompanied by heating and pressing, and improving the outer appearance and design when formed into a molded body.

MODE FOR CARRYING OUT THE INVENTION

The laminated film of the present invention is a laminated film having a configuration in which 51 or more layers of two or more different types of thermoplastic resin layers are regularly laminated, wherein when a highest glass transition temperature determined by differential scanning calorimetry (DSC measurement) is defined as TA, and a shrinkage onset temperature determined from a TMA curve in a primary orientation direction is defined as TX, said TX is lower than said TA by 5°C or more and 30°C or less. Embodiments of the present invention will be described below, but the present invention is not to be construed as being limited to the embodiments including the following examples, and various modifications are naturally possible within a range in which the object of the invention can be achieved and the gist of the invention is not deviated from. In addition, for the purpose of simplifying the explanation, a laminated film in which two different types of polyester resin layers (referred to as A layer and B layer) are regularly laminated will be described as an example in some parts of the explanation, but the same should be understood in the case where three or more types of polyester resin layers are used or where thermoplastic resin layers other than polyester resin are used.

The laminated film of the present invention has a configuration in which 51 or more layers of two or more different types of thermoplastic resin layers are regularly laminated, and preferably has a configuration in which 51 or more layers of two or more different types of thermoplastic resin layers having different main components are regularly laminated. Here, the "main component" refers to a component contained in an amount exceeding 50% by mass and 100% by mass or less when the total components constituting the thermoplastic resin layer are taken as 100% by mass, and hereinafter, the main component can be interpreted in the same manner. "Thermoplastic resin layers are different" refers to a case where at least one of the following 1 to 3 corresponds when comparing two thermoplastic resin layers, and preferably corresponds to at least the following "2". In addition, in the case where three or more types of thermoplastic resin layers exist, for all of them to be different, it is necessary that at least one of the following 1 to 3 corresponds when comparing any combination of two thermoplastic resin layers (the same applies when four or more types of thermoplastic resin layers exist).

1: The refractive index differs by 0.01 or more in the primary orientation direction (the method for specifying the primary orientation direction will be described later).

2: Having different melting points or crystallization temperatures (different melting points or crystallization temperatures means that either the melting point or the crystallization temperature determined by the measurement method described later differs by 3°C or more. Note that the case where one thermoplastic resin layer has a melting point and the other thermoplastic resin layer does not have a melting point, or the case where one thermoplastic resin layer has a crystallization temperature and the other thermoplastic resin layer does not have a crystallization temperature is also considered to have different melting points or crystallization temperatures).

3: The composition analyzed by nuclear magnetic resonance spectroscopy or gas chromatograph mass spectrometry differs by 5% by mass or more.

In the laminated film of the present invention, "a configuration in which 51 or more layers of thermoplastic resin layers are regularly laminated" refers to a configuration in which 51 or more layers of a plurality of types of thermoplastic resin layers are laminated in the thickness direction with a certain regularity. As a specific example, for example, in the case where there are two types of different thermoplastic resin layers (A layer, B layer), when the A layer and the B layer are expressed as A and B, a configuration of A(BA)n, a configuration of B(AB)n (the inside of the parentheses is a repeating unit, and n is a natural number representing the number of repeating units; the same applies hereinafter), such as a configuration in which two types of layers are alternately laminated in the thickness direction, can be cited. In addition, as a specific example in the case where there are three types of different thermoplastic resin layers (A layer, B layer, C layer), when the A layer, B layer, and C layer are expressed as A, B, and C in order, a configuration of (ABCB)nA, a configuration of (ABC)nA, and the like can be cited. By regularly laminating different thermoplastic resin layers in this way, the laminated film becomes capable of reflecting light of a wavelength specified by the relationship between the refractive index difference of each layer and the layer thickness.

Generally, in a laminated film having such a layer configuration, from the principle of interference reflection, the larger the number of constituent layers, the higher the reflectance can be obtained over a wider band. Therefore, the number of regularly laminated layers is preferably 101 layers or more, and more preferably 401 layers or more. For the above reason, the larger the number of layers of the laminated film, the more preferable it is, but from the viewpoint of suppressing an increase in manufacturing cost accompanying an increase in size of a manufacturing apparatus as the number of layers increases, and deterioration of handling properties due to the laminated film itself becoming thick, practically, 1001 layers or less is a practical range.

From the viewpoint of using for heat ray reflection applications, the laminated film of the present invention preferably comprises a reflection band having a width of 100 nm or more where a reflectance is 30% or more when light is incident on a film surface under conditions of an incident angle of 10° and a wavelength of 800 to 2000 nm. "Comprising a reflection band having a width of 100 nm or more where a reflectance is 30% or more" means comprising at least one band where the reflectance is continuously 30% or more over a wavelength of 100 nm or more.

Sunlight has an intensity distribution mainly in the visible light range, and the intensity distribution tends to decrease as the wavelength increases. However, for use in applications requiring high transparency such as heat ray-shielding glass, it is necessary to achieve both transparency and high heat ray-shielding performance. Thus, by efficiently reflecting light of a wavelength of 800 to 2000 nm, which is slightly larger than the visible light range, a laminated film achieving both transparency and high heat ray-shielding performance can be obtained.

From the above viewpoint, the laminated film of the present invention more preferably has a reflection band where the reflectance is continuously 50% or more over 200 nm or more in a wavelength range of 900 to 1200 nm, and still more preferably, the reflectance is continuously 50% or more over the entire wavelength range of 900 to 1200 nm. Moreover, the average reflectance at a wavelength of 900 to 1200 nm is preferably 70% or more, and it is further preferable that the average reflectance at a wavelength of 900 to 1200 nm is 80% or more. As the average reflectance at a wavelength of 900 to 1200 nm increases, it becomes possible to impart high heat ray-shielding performance to the laminated film.

Since such a laminated film can be realized by increasing the difference in in-plane refractive index of two or more types of resins having different optical properties, in the case of a biaxial stretching film, it may be a laminated film in which a layer mainly composed of a crystalline polyester resin and a layer mainly composed of a thermoplastic resin that can maintain amorphousness even during stretching or is melted in a heat treatment step are alternately laminated (in other words, it is preferable to be a laminated film in which a layer mainly composed of a crystalline thermoplastic resin and a thermoplastic resin that can maintain amorphousness even during stretching or is melted in a heat treatment step are alternately laminated). In addition, in order to obtain a laminated film comprising a reflection band having a width of 100 nm or more where a reflectance is 30% or more, it is also effective to set the in-plane draw ratio (product of the draw ratio in the vertical direction (also referred to as film transport direction or longitudinal direction) and the draw ratio in the horizontal direction (width direction within the film plane in the transport direction) described later) to 9.0 times or more and 18.0 times or less, or to increase the number of layers. In order to bring the average reflectance at a wavelength of 900 to 1200 nm into the above preferred range, it is effective to increase the in-plane draw ratio within the above range or to increase the number of layers.

Here, the in-plane refractive index is an average value of the refractive index in the primary orientation direction and the refractive index in a direction orthogonal to the primary orientation direction in the film plane (primary orientation orthogonal direction). When the thermoplastic resin layer not located on the outermost surface is amorphous, the in-plane refractive index may be determined in any two directions orthogonal in the plane using a sheet pressed after vacuum drying the thermoplastic resin. This is because amorphous resins usually do not have birefringence, and the refractive index in each direction does not fluctuate depending on the presence or absence of stretching. The refractive index can be measured with a laser having a wavelength of 632.8 nm, and as a measuring apparatus, for example, "SPA-4000" manufactured by SAIRON TECHNOLOGY, INC., etc. can be used.

"Crystalline" as used herein means that the amount of melting heat is 5 J/g or more in differential scanning calorimetry (DSC). On the other hand, "amorphous" similarly means that the amount of melting heat is less than 5 J/g. The crystalline polyester resin can be made to have a higher in-plane refractive index than in an amorphous state before stretching by orienting and crystallizing in the stretching/heat treatment step. On the other hand, in the case of an amorphous polyester resin, by performing heat treatment at a temperature far exceeding the glass transition temperature in the heat treatment step, slight orientation generated in the stretching step can be greatly relaxed, and a low refractive index in an amorphous state can be maintained. By adopting such a laminated structure, a refractive index difference can be easily provided between the crystalline polyester resin and the amorphous polyester resin in the stretching and heat treatment steps in the production of the laminated film.

In the case of a laminated film having a configuration in which two types of layers mainly composed of thermoplastic resins having different crystallinities are alternately laminated in this way, it is preferable to make the outermost layers on both sides relatively highly crystalline layers (layers mainly composed of a crystalline thermoplastic resin) from the viewpoint of suppressing sticking to a roll or the like during film formation. Hereinafter, a laminated film having such a configuration will be described, but unless otherwise specified, a relatively highly crystalline layer will be described as an A layer, and a lower one as a B layer.

Here, it is preferable that the optical thicknesses of the adjacent A layer and B layer satisfy the following formula (1) and formula (2) simultaneously.

$$\text{Formula (1):} \quad \lambda/m = 2(n_\alpha d_\alpha + n_\beta d_\beta)$$

$$\text{Formula (2):} \quad n_\alpha d_\alpha = n_\beta d_\beta$$

Here, $\lambda$ is a reflection wavelength, $n_\alpha$ is an in-plane refractive index of the A layer, $d_\alpha$ is a thickness of the A layer, $n_\beta$ is an in-plane refractive index of the B layer, $d_\beta$ is a thickness of the B layer, and m is an order and is a natural number. By having a layer thickness distribution that satisfies Formula (1) and Formula (2) simultaneously, even-order reflection can be eliminated. Therefore, since it is possible to lower the average reflectance in the range of wavelength 400 to 800 nm which is the visible light range while increasing the average reflectance in the range of wavelength 900 nm to 1200 nm, a laminated film having excellent transparency and high heat ray-shielding performance can be obtained.

Generally, since the in-plane refractive index of the film surface after molding and stretching a thermoplastic resin is about 1.4 to about 1.9, by setting the ratio of thicknesses of adjacent A layer and B layer (thickness of A layer / thickness of B layer) to 0.7 or more and 1.4 or less, a laminated film in which even-order reflection is suppressed can be obtained. Therefore, from the above viewpoint, the ratio of thicknesses of adjacent A layer and B layer (thickness of A layer / thickness of B layer) is preferably 0.7 or more and 1.4 or less, and more preferably 0.8 or more and 1.2 or less. By setting the thicknesses of the adjacent A layer and B layer in such a range, the average reflectance at a wavelength of 400 to 800 nm can be preferably 20% or less, and more preferably 15% or less. As a result, reflection in the visible light range of the laminated film can be suppressed, and coloring and glare can be reduced.

In the laminated film of the present invention, assuming that the main component of the A layer is thermoplastic resin A and the main component of the B layer is thermoplastic resin B, the thermoplastic resin A and B must be different from each other. As the thermoplastic resin A and thermoplastic resin B, polyester resin, acrylic resin, polycarbonate resin, etc. can be used. Among them, since they are excellent in transparency and moldability, it is preferable to use polyester resin as the thermoplastic resin A and thermoplastic resin B. Further, when the laminated film further has a C layer and the main component of the C layer is thermoplastic resin C, it is preferable that the thermoplastic resin C is also a polyester resin. Here, the polyester resin refers to a polymer obtained by polycondensation of a dicarboxylic acid component and a diol component.

In the laminated film of the present invention, examples of the dicarboxylic acid unit of the polyester resin used for the thermoplastic resin A, thermoplastic resin B, and thermoplastic resin C include constituent units such as terephthalic acid, isophthalic acid, phthalic acid, naphthalenedicarboxylic acid (1,4-naphthalenedicarboxylic acid, 1,5-naphthalenedicarboxylic acid, 2,6-naphthalenedicarboxylic acid, 2,3-naphthalenedicarboxylic acid), 4,4'-diphenyldicarboxylic acid, 4,4'-diphenylsulfonedicarboxylic acid, adipic acid, sebacic acid, dimer acid, cyclohexane dicarboxylic acid, and their ester-forming derivatives.

Examples of the diol unit of the polyester resin include constituent units such as ethylene glycol, 1,2-propanediol, 1,3-butanediol, 1,4-butanediol, 1,5-pentadiol, diethylene glycol, polyalkylene glycol, 2,2-bis(4'-β-hydroxyethoxyphenyl) propane, isosorbide, 1,4-cyclohexanedimethanol, spiroglycol, neopentyl glycol, polyethylene glycol, polypropylene glycol, polybutylene glycol, triethylene glycol, tetraethylene glycol, polytetramethylene ether glycol, and their ester-forming derivatives.

As the dicarboxylic acid unit constituting the polyester resin, constituent units such as terephthalic acid, 2,6-naphthalenedicarboxylic acid, and isophthalic acid are preferably cited, and as the diol unit, constituent units such as ethylene glycol, 1,4-cyclohexanedimethanol, polyalkylene glycol, polyethylene glycol, tetraethylene glycol, and polytetramethylene ether glycol are preferably cited.

As a preferred embodiment of the laminated film of the present invention, an embodiment in which the in-plane refractive index of at least one surface of the laminated film is 1.68 or more and 1.80 or less can be cited. Generally, it is preferable that the surface layer is a relatively highly crystalline layer in consideration of ease of film formation, etc., but since the in-plane refractive index of this surface layer is 1.68 or more, it is possible to increase the in-plane refractive index difference with a relatively low crystalline layer. Therefore, it becomes easy to make the laminated film comprise a reflection band having a width of 100 nm or more where a reflectance is 30% or more. On the other hand, when the in-plane refractive index of the surface layer is lower than 1.80, deterioration of interlayer adhesion between two types of layers alternately laminated is suppressed, and cloudiness of the laminated film and delamination at the interface are reduced.

From the above viewpoint, in the laminated film of the present invention, it is preferable that the A layer is mainly composed of a crystalline polyester having a naphthalenedicarboxylic acid unit as a main constituent unit. By adopting such an embodiment, the reflectance on the surface of the A layer becomes high, and it becomes easy to provide a refractive index difference with the B layer, so that a laminated film having more excellent reflection performance can be obtained. Note that "having a naphthalenedicarboxylic acid unit as a main constituent unit" means that the naphthalenedicarboxylic acid unit accounts for more than 50 mol% and 100% by mass or less of the total dicarboxylic acid constituent units of the polyester resin.

Examples of the naphthalene dicarboxylic acid serving as a structural unit of the crystalline polyester resin of the A layer include 1,4-naphthalene dicarboxylic acid, 1,5-naphthalene dicarboxylic acid, 2,6-naphthalene dicarboxylic acid, 2,3-naphthalene dicarboxylic acid, and the like, and 2,6-naphthalene dicarboxylic acid is particularly preferable. When the B layer is mainly composed of an amorphous thermoplastic resin, the greater the amount of naphthalene dicarboxylic acid units in the crystalline polyester resin that is the main component of the A layer, the easier it is to increase the refractive index difference between the A layer and the B layer. Therefore, the naphthalene dicarboxylic acid units in the dicarboxylic acid units of the crystalline polyester resin that is the main component of the A layer account for more preferably 80 mol% or more and 100 mol% or less, and further preferably 95 mol% or more and 100 mol% or less. From the same viewpoint, the content of the crystalline polyester resin in the A layer is preferably 80% by mass or more and 100% by mass or less, and more preferably 95% by mass or more and 100% by mass or less, when the entire layer is taken as 100% by mass.

In the laminated film of the present invention, the difference in in-plane refractive index between the A layer and the B layer is preferably 0.05 or more. It is more preferably 0.12 or more, and further preferably 0.14 or more and 0.35 or less. When the difference in in-plane average refractive index is smaller than 0.05, it may be difficult to have a reflection band where the reflectance is 30% or more. An example of a method for achieving this is to use a crystalline polyester resin as the main component of the A layer and an amorphous thermoplastic resin as the main component of the B layer. In this case, it becomes possible to easily provide a refractive index difference in the stretching and heat treatment steps in the production of the laminated film.

From the viewpoint of reflectance, a larger difference in in-plane refractive index between the A layer and the B layer is preferable, but if the difference in in-plane refractive index is to be increased, the chemical structures of the thermoplastic resins that are the main components of both layers need to be significantly different, and such an embodiment deteriorates interlayer adhesion. Considering this point, by keeping the difference in in-plane average refractive index between the A layer and the B layer to 0.35 or less, lamination becomes easy, and the heat resistance and handling properties of the obtained laminated film are improved.

From the viewpoint of improving the outer appearance when the laminated film of the present invention is formed into a molded body such as laminated glass, when a highest glass transition temperature determined by differential scanning calorimetry (DSC) is defined as TA, and a shrinkage onset temperature determined from a TMA curve in a primary orientation direction is defined as TX, it is necessary that TX is lower than TA by 5°C or more and 30°C or less, in other words, TA-TX is 5°C or more and 30°C or less. Here, the primary orientation direction refers to a direction in which the degree of molecular orientation is the largest in the film plane, and this can be specified by measurement with a known molecular orientation meter (details of the measurement method will be described later). The shrinkage onset temperature can be measured by TMA measurement, and details of the measurement method will be described later. The DSC measurement can be performed based on JIS-K-7121 (1987), and details of the measurement method will be described later.

When the laminated film is laminated with a support and an interlayer to form laminated glass, heating and pressing are performed to enhance adhesion between each member. In the molding process where heat and pressure are applied in this way, wavy strains and thickness changes may occur in the laminated film due to thickness unevenness of the interlayer and a difference in heat shrinkage stress between the interlayer and the laminated film. When such wavy strains or thickness unevenness occur, light scattering or diffuse reflection occurs, or color unevenness occurs in the film plane, resulting in poor outer appearance of the molded article. On the other hand, since the glass as the support hardly deforms at this time, the shape of the interlayer is hardly relaxed by the support. Since the laminated film has interfaces formed of different types of thermoplastic resin layers therein, scattering and reflection by the interfaces are added in addition to light scattering and diffuse reflection by the film surface, so that irregularities are more noticeable than in a film made of a single type of resin. Therefore, if a laminated film in which irregularities are unlikely to occur can be used, the problem of defects in outer appearance of the molded article can be solved.

When the laminated film is laminated with a support and an interlayer and molded, generally, the laminated film and the interlayer are bonded together at a low temperature in advance (pre-lamination step (hereinafter sometimes referred to as pre-lamination step)), and then bonded to the support by pressing at a higher temperature (main compression bonding step). The method of the pre-lamination step is not particularly limited, but it is common to sandwich the film with two interlayers and perform roll lamination at 90 to 100°C, which is slightly higher than the glass transition temperature of the polyester resin. The method of the main compression bonding step is also not particularly limited, but it is common to sandwich the sheet after the pre-lamination step with supports such as glass and perform compression bonding in an autoclave (pressurized heating bonding furnace) at 140 to 150°C for 20 to 30 minutes at a pressure of 12 to 14 kg/cm$^2$.

At this time, in the pre-lamination step and the main compression bonding step, the laminated film and the interlayer soften and shrink, and if their flexibility and shrinkage behavior differ significantly, it causes bubbles, wrinkles, and in-plane color unevenness. Therefore, the laminated film is required to behave such that it shrinks not only in the main compression bonding step molded at a higher temperature but also at a lower temperature such as in the pre-lamination step, that is, the shrinkage onset temperature is lower than the glass transition temperature.

Generally, a thermoplastic resin film is obtained by processing pellets into a sheet by melt extrusion and stretching and processing at a temperature higher than the glass transition temperature, so that oriented crystals formed at a temperature higher than the glass transition temperature relax by being heated again, and shrinkage proceeds rapidly. However, in such a film, even if it is possible to follow the shrinkage of the interlayer in either the main compression bonding step or the pre-lamination step, shrinkage becomes insufficient or excessive at the other temperature, resulting in bubbles, wrinkles, and in-plane color unevenness. The present invention has found that the above problems can be solved by designing the laminated film so that shrinkage starts at a temperature 5°C or more and 30°C or less lower than the highest glass transition temperature (in other words, TA-TX is 5°C or more and 30°C or less).

When the glass transition temperature is TA and the shrinkage onset temperature determined from the TMA curve in the primary orientation direction is TX, by setting TX to be 5°C or more and 30°C or less lower than TA, the occurrence of bubbles, wrinkles, and in-plane color unevenness can be suppressed, and a molded body excellent in outer appearance (particularly outer appearance in the primary orientation direction) can be obtained. From the above viewpoint, it is more preferably 10°C or more and 30°C or less. If TA-TX exceeds 30°C, the laminated film becomes too soft, resulting in poor productivity or poor handling during molding. Also, if TA-TX is less than 5°C, bubbles and wrinkles are likely to occur, resulting in defects in outer appearance.

In the laminated film of the present invention, when the shrinkage onset temperature determined from the TMA curve in the direction orthogonal to the primary orientation is TY, the difference between TY and TX is preferably 0°C or more and 10°C or less. By adopting such an aspect, the outer appearance when observing the laminated film or a molded body using the same from a direction orthogonal to the primary orientation direction is also improved. Therefore, it becomes possible to obtain a laminated film and a molded body excellent in outer appearance when viewed from various angles. Here, the direction orthogonal to the primary orientation refers to a direction orthogonal to the primary orientation direction in the film plane. The "difference between TY and TX" shall be calculated as an absolute value. In the laminated film of the present invention, since the difference between TY and TX is 10°C or less, not only the outer appearance when observed from the primary orientation direction but also the outer appearance when observed from the direction orthogonal to the primary orientation direction is improved.

For the same reason as the preferred range of TX, in the laminated film of the present invention, TY is preferably 5°C or more and 30°C or less lower than TA (in other words, TA-TY is 5°C or more and 30°C or less), and more preferably 10°C or more and 30°C or less.

The method for setting TX to be 5°C or more and 30°C or less lower than TA is not particularly limited, but for example, when obtaining a laminated film by sequential biaxial stretching described later, mention may be made of performing slight stretching in the process of gradually cooling to room temperature after performing heat treatment after stretching in the width direction (TD direction). Alternatively, it is also effective to perform pseudo slight stretching by increasing the tension (draw) in the winding step after slow cooling. All of these enable obtaining a film that shrinks at a temperature lower than the glass transition temperature by slightly stretching at a temperature lower than the glass transition temperature. It is also effective to control the heat treatment temperature and the cooling temperature after heat treatment to a suitable range. These methods can be combined as appropriate.

From the viewpoint of improving the outer appearance when formed into a molded body such as laminated glass, the laminated film of the present invention preferably has a heat shrinkage rate of 0.5% or more and 1.2% or less in at least one of the primary orientation direction and the direction orthogonal to the primary orientation direction under an atmosphere of TA. Here, "under an atmosphere of TA" refers to an environment where the temperature is TA. From the above viewpoint, under an atmosphere of TA, the heat shrinkage rate in at least one of the primary orientation direction and the direction orthogonal to the primary orientation direction is more preferably 0.7% or more and 1.2% or less, and further preferably 0.9% or more and 1.2% or less. From the above viewpoint, in the laminated film of the present invention, the heat shrinkage rate is preferably 0.5% or more and 1.2% or less in both the primary orientation direction and the direction orthogonal to the primary orientation direction, and the preferable range is also as described above. The heat shrinkage rate can be calculated by measuring the dimensional change after heat treatment, and details of the measurement method will be described later.

If the heat shrinkage rate in at least one of the primary orientation direction and the direction orthogonal to the primary orientation direction is 0.5% or more under an atmosphere of TA, bubbles, wrinkles, and in-plane color unevenness are less likely to occur in the laminated glass process, particularly in the pre-lamination process. On the other hand, if the shrinkage rate is 1.2% or less in at least one of the above directions, excessive softening of the laminated film is suppressed, so that productivity and handling properties during molding become good.

In order to make the heat shrinkage rate in at least one of the primary orientation direction and the direction orthogonal to the primary orientation direction 0.5% or more and 1.2% or less or within the above preferred range under an atmosphere of TA, the same method as the method for setting TX to be 5°C or more and 30°C or less lower than TA can be used.

From the viewpoint of improving the outer appearance when formed into a molded body such as laminated glass, the laminated film of the present invention preferably has a heat shrinkage rate of 1.5% or more and less than 4.0% in at least one of the primary orientation direction and the direction orthogonal to the primary orientation direction under an atmosphere of 150°C, more preferably 2.0% or more and less than 4.0%, and still more preferably 2.0% or more and 3.0% or less. From the above viewpoint, it is more preferable that the heat shrinkage rate in both the primary orientation direction and the direction orthogonal to the primary orientation direction under an atmosphere of 150°C is 1.5% or more and less than 4.0%, or within the above preferred range.

If the heat shrinkage rate in at least one of the primary orientation direction and the direction orthogonal to the primary orientation direction is 1.5% or more under an atmosphere of 150°C, bubbles, wrinkles, and in-plane color unevenness are less likely to occur in the laminated glass process, particularly in the main compression bonding process. On the other hand, if the heat shrinkage rate in at least one of the above directions is less than 4.0% under an atmosphere of 150°C, deterioration of productivity and handling during molding due to excessive softening of the laminated film, occurrence of color unevenness, and deterioration of outer appearance can be reduced.

In order to make the heat shrinkage rate in at least one of the primary orientation direction and the direction orthogonal to the primary orientation direction 1.5% or more and less than 4.0% under an atmosphere of 150°C, a method of adjusting the draw ratio and the heat treatment temperature can be mentioned. More specifically, the heat shrinkage rate can be increased by increasing the draw ratio of the film or lowering the heat treatment temperature after stretching in the width direction. These methods can be used in combination as appropriate.

More specifically, in order to obtain a laminated film having a heat shrinkage rate of 1.5% or more and less than 4.0% in at least one of the primary orientation direction and the direction orthogonal to the primary orientation direction under an atmosphere of 150°C, the in-plane draw ratio is preferably 11.0 times or more and 18.0 times or less, and more preferably 12.0 times or more and 18.0 times or less. From the above viewpoint, it is particularly preferable that the longitudinal draw ratio is 3.0 times or more and 3.8 times or less, and the transverse draw ratio is 3.7 times or more and 4.2 times or less. When the in-plane draw ratio is 11.0 times or more, it becomes easy to set the heat shrinkage rate in each direction under an atmosphere of 150°C to 1.5% or more and less than 4.0%. Further, when the in-plane draw ratio is 18.0 times or less, whitening during film formation due to excessive stretching and decrease in productivity due to film breakage can be suppressed.

Since the laminated film of the present invention makes it difficult to generate bubbles, wrinkles, and in-plane color unevenness by following the shrinkage of the interlayer in both the pre-lamination process and the main compression bonding process, the ratio of the heat shrinkage rate at high temperature in the main compression bonding process to the heat shrinkage rate at the glass transition temperature of the film used affects bubbles, wrinkles, and in-plane color unevenness. Since the maximum temperature of the main compression bonding process when glass is used as the support is generally 150°C, if the heat shrinkage rate at the temperature where it shrinks most is significantly different from or too close to the heat shrinkage rate at the glass transition temperature, it becomes difficult to follow the shrinkage of the interlayer in both the pre-lamination process and the main compression bonding process.

From the above viewpoint, in the laminated film of the present invention, when the average value of the heat shrinkage rate at 150°C is S(150) and the average value of the heat shrinkage rate at TA is S(TA), S(150)/S(TA) is preferably 1.5 or more and 5.0 or less. From the above viewpoint, S(150)/S(TA) is more preferably 1.5 or more and 4.0 or less, and further preferably 1.5 or more and 3.0 or less. Here, S(150) refers to the average value of the heat shrinkage rate in the primary orientation direction and the heat shrinkage rate in the direction orthogonal to the primary orientation direction at 150°C, and S(TA) and S(120) described later can be interpreted in the same manner except that the temperature is TA or 120°C instead of 150°C. When S(150)/S(TA) is 5.0 or less, bubbles, wrinkles, and in-plane color unevenness caused by an excessively high heat shrinkage rate of the laminated film at 150°C or an excessively small heat shrinkage at the glass transition temperature (TA) can be suppressed. When S(150)/S(TA) is 1.5 or more, since it follows the shrinkage of the interlayer in both the pre-lamination process and the main compression bonding process when glass is used as the support, the occurrence of bubbles and wrinkles can be reduced.

Similarly to the above, when a resin such as acrylic or polycarbonate is used as a support, the temperature of the main compression bonding process is generally lower than that of glass. Therefore, from the above viewpoint, when average value of heat shrinkage rates at 120°C is defined as S(120) and average value of heat shrinkage rates at TA is defined as S(TA), S(120)/S(TA) is preferably 1.5 or more and 5.0 or less. From the above viewpoint, S(120)/S(TA) is more preferably 1.5 or more and 3.0 or less, and further preferably 1.5 or more and 2.0 or less. When S(120)/S(TA) is 5.0 or less, bubbles, wrinkles, and in-plane color unevenness caused by an excessively high heat shrinkage rate of the laminated film at 120°C or an excessively small heat shrinkage at the glass transition temperature (TA) can be suppressed. When S(120)/S(TA) is 1.5 or more, since it follows the shrinkage of the interlayer in both the pre-lamination process and the main compression bonding process when a resin such as acrylic or polycarbonate is used as the support, the occurrence of bubbles and wrinkles can be reduced.

As a method for setting S(150)/S(TA) to 1.5 or more and 5.0 or less, and a method for setting S(120)/S(TA) to 1.5 or more and 5.0 or less, it is effective to lower S(TA). However, if the glass transition temperature of the thermoplastic resin constituting the laminated film is close to 150°C or 120°C, the heat shrinkage rates become close to S(150) or S(120), making it difficult to set these ratios to 1.5 or more. Therefore, it is effective to set the higher Tg among the glass transition temperatures Tg of the thermoplastic resins (thermoplastic resin A, thermoplastic resin B) which are the main components of the two types of layers (A layer, B layer) having different main components to 95°C or more and 105°C or less, preferably 100°C or more and 105°C or less. It is also effective to contain a component having a low melting point in the A layer or the B layer, and in terms of the process, it is also effective to set the heat treatment temperature to a preferred range described later.

The method for lowering the glass transition temperature Tg of the thermoplastic resin is not particularly limited, but examples thereof include a method of copolymerizing a component having low crystallinity with the thermoplastic resin, and a method of using a thermoplastic resin having a low glass transition temperature. As an example of the former, polyethylene naphthalate (PEN), which is most widely used as a polyester containing naphthalene dicarboxylic acid as a dicarboxylic acid component, has a glass transition temperature of about 120°C, but it is possible to lower the glass transition temperature by copolymerizing a structural unit having lower crystallinity than the ethylene naphthalate unit with PEN. As an example of the latter, a method of using a thermoplastic resin (such as polyethylene terephthalate) having a glass transition temperature lower than 105°C can be mentioned. By using such a method, it becomes easy to set the glass transition temperature to 105°C or less. Note that these methods may be used in appropriate combination.

The structural unit having low crystallinity to be copolymerized is not particularly limited as long as it is a structural unit having lower crystallinity than the main structural unit, but in the case of a polyester resin, it is preferably a structural unit derived from a compound containing a chemical structure represented by the following formula (3). That is, when the thermoplastic resin A or the thermoplastic resin B is a polyester resin, it is preferable to copolymerize the chemical structure represented by formula (3) in order to lower the glass transition temperature. Instead of copolymerization, a mixture obtained by mixing a thermoplastic resin containing a structural unit represented by the following formula (3) into the A layer or the B layer may be used. In formula (3), m and n represent natural numbers such that m $\times$ n is 5 or more.

$$-O-(C_nH_{2n}-O)_m- ... \qquad \text{Formula (3).}$$

When the thermoplastic resin component constituting each layer is unknown, the presence or absence of the chemical structure represented by formula (3) can be confirmed by, for example, the following method. First, a weight peak is confirmed by gas chromatograph mass spectrometry (GC-MS). Next, the presence or absence of a peak derived from a bond between each atom possessed by the estimated chemical structure is confirmed by Fourier transform infrared spectroscopy (FT-IR). Furthermore, the proton absorption line area derived from the position of the chemical shift derived from the position of the hydrogen atom or carbon atom on the chemical structural formula and the number of hydrogen atoms is confirmed by proton nuclear magnetic resonance spectroscopy ($^1$H-NMR, $^{13}$C-NMR). From these results, the presence or absence of the chemical structure represented by formula (3) can be determined.

Here, m $\times$ n in formula (3) is preferably 6 or more, and more preferably 8 or more. Specific examples of the compound having the chemical structure represented by formula (3) include polyethylene glycol, tetraethylene glycol, polytetramethylene ether glycol, triethylene glycol, dipropylene glycol, tripropylene glycol, tetrapropylene glycol, tributylene glycol, tetrabutylene glycol, and the like.

When at least one of the A layer and the B layer contains a copolymerized polyester resin having a chemical structure represented by formula (3) as a main component, the copolymerized polyester resin preferably contains 0.5 mol% or more and 40 mol% or less of a structural unit having the chemical structure represented by formula (3) with respect to 100 mol% of all diol structural components. When the diol unit of formula (3) is contained in this range, it becomes easy to set the glass transition temperature of the thermoplastic resin A or the thermoplastic resin B to 105°C or less. In the case where the diol unit of formula (3) is contained in both the thermoplastic resin A and the thermoplastic resin B by copolymerization, the amount can be adjusted appropriately within the above range in consideration of crystallinity in addition to the glass transition temperature. For example, if the thermoplastic resin A is a copolymer of PEN and the thermoplastic resin B is a copolymer of PET, the content of the diol unit of formula (3) is preferably 3 mol% or more and 20 mol% or less with respect to 100 mol% of all diol structural components in the thermoplastic resin A, and 3 mol% or more and 20 mol% or less with respect to 100 mol% of all diol structural components in the thermoplastic resin B.

Further, a compound having the chemical structure represented by formula (3) may be contained in at least one of the A layer and the B layer. At this time, the amount of the compound is preferably adjusted to be 0.5 mol% or more and 40 mol% or less with respect to 100 mol% of all diol structural components of all polyester resins constituting the A layer or the B layer. Even in the case of having the compound structure represented by formula (3) by mixing, the same effect as in the case of lowering the glass transition temperature by copolymerization can be obtained.

On the other hand, when having the chemical structure represented by formula (3) by mixing, the haze value tends to be high due to the difference in compatibility of different resins, or the heat resistance may be inferior. Therefore, it is more preferable that the A layer and the B layer contain the chemical structure represented by formula (3) in the thermoplastic resin A or the thermoplastic resin B by copolymerization rather than by mixing of compounds. Furthermore, copolymerizing a diol structural component having the chemical structure represented by formula (3) with the thermoplastic resin A or the thermoplastic resin B is also preferable in that it can suppress the components having these chemical structures from flowing out of the laminated film system due to evaporation or sublimation.

As another method for obtaining the same effect as setting the glass transition temperature of the thermoplastic resin A or the thermoplastic resin B to 105°C or less, a method of mixing a polyester resin having a glass transition temperature lower than these thermoplastic resins into the A layer or the B layer can be mentioned. Examples of the polyester resin having a low glass transition temperature include terephthalic acid, isophthalic acid, phthalic acid, adipic acid, sebacic acid, dimer acid, cyclohexane dicarboxylic acid, and their ester-forming derivatives as dicarboxylic acid structural components. Examples of the diol structural component include the same components as described above, but ethylene glycol, 1,4-cyclohexane dimethanol, and 1,4-butanediol are particularly preferable. By adding such components to the A layer or the B layer, the same effect as setting S(150)/S(TA) or S(120)/S(TA) to a suitable range can be obtained, and it becomes possible to suppress bubbles, wrinkles, and in-plane color unevenness during molding. However, compared to the above example using a copolymer, attention must be paid to the point that the reflectance tends to decrease due to the lower refractive index of each thermoplastic resin layer, and the internal haze of the film tends to increase due to the mixing of different resins.

The laminated film of the present invention preferably has an internal haze of 0.5% or less. The internal haze is an index representing haze (turbidity) inside the film excluding light scattering on the surface of the film. By lowering the internal haze, a laminated film that is transparent and reflects light of a specific wavelength can be obtained, and such a laminated film can be widely applied to applications requiring transparency such as half mirrors and heat ray reflective films. From the above viewpoint, the internal haze of the laminated film is preferably 0.4% or less, and more preferably 0.3% or less. The internal haze of the laminated film can be measured by measuring haze according to JIS-K-7105 (1981) in a state where it is placed in a quartz cell filled with liquid paraffin (details of the measurement method will be described later).

In order to bring the internal haze of the laminated film into the above-mentioned range, it is achieved by adjusting the type and amount of components other than the thermoplastic resin A in the A layer, or adjusting the type and amount of components other than the thermoplastic resin B in the B layer. By adopting such a configuration, a suitable amount of a component having excellent compatibility and dispersibility with each thermoplastic resin can be added, so that the internal haze can be reduced. Also, the internal haze can be lowered by using an appropriate combination of the thermoplastic resin A and the thermoplastic resin B. As an example of such a combination of the thermoplastic resin A and the thermoplastic resin B, a combination using a polyethylene naphthalate resin copolymerized with polyethylene glycol as the thermoplastic resin A and a polyethylene terephthalate resin copolymerized with cyclohexane dimethanol as the thermoplastic resin B can be mentioned. Furthermore, the internal haze can also be lowered by reducing the number of resin layers or reducing the thickness of the film.

From the viewpoint of using as a projection image display member such as a head-up display, the laminated film of the present invention preferably has a P-wave average reflectance at a wavelength of 400 to 700 nm at an incident angle of 60° of 10% or more and 50% or less. In the case of a general transparent substrate such as transparent glass or transparent resin film, as the incident angle is gradually increased from 20° with respect to the normal line of the film surface, the reflectance of the P wave, which is one of polarized light, decreases, and the reflectance becomes 0% at an angle called the Brewster angle. The Brewster angle varies depending on the refractive index of the material, and is about 60° in the case of polyester resin. Therefore, with a general transparent substrate, it is difficult to transmit P waves from the front direction and reflect P waves from an oblique direction. The incident angle refers to the angle formed by the normal line of the film surface and the traveling direction of the light ray.

The aspect in which a P-wave average reflectance at a wavelength of 400 to 700 nm at an incident angle of 60° is 10% or more and 50% or less is, in other words, an aspect that does not have an angle corresponding to the Brewster angle. Therefore, by adopting such an aspect, reflection of P waves incident from an oblique direction with respect to the film surface becomes possible. When the P-wave average reflectance at a wavelength of 400 to 700 nm at an incident angle of 60° is 10% or more, the display property of the projected image when projecting an image by P waves onto the laminated film becomes high. From the above viewpoint, the P-wave average reflectance at an incident angle of 60° is preferably 20% or more, and more preferably 25% or more. On the other hand, when the P-wave average reflectance at an incident angle of 60° is 50% or less, it is possible to suppress an increase in the average reflectance of P waves at an incident angle of 20° to 50° as the average reflectance of P waves at an incident angle of 60° increases. Therefore, glare of the projected image by P waves is reduced, and display property is improved. In order to make the P-wave average reflectance at an incident angle of 60° 20% or more, it is preferable that the absolute value of the difference in the refractive index perpendicular to the plane between the A layer and the B layer is 0.11 or more and 0.20 or less, and more preferably 0.13 or more and 0.20 or less. If the absolute value of the difference in the refractive index perpendicular to the plane between the A layer and the B layer is 0.11 or more, the display property of the projected image described later becomes high. On the other hand, if this difference is suppressed to 0.20 or less, delamination at the interface between the A layer and the B layer is reduced.

In order to obtain such a laminated film, a method of adjusting the refractive index difference in the direction perpendicular to the film surface between the two thermoplastic resin layers and the number of layers can be used. At this time, the larger the refractive index difference in the direction perpendicular to the film surface and the larger the number of layers, the larger the P-wave average reflectance at an incident angle of 60° can be made. The difference in the refractive index perpendicular to the plane between the A layer and the B layer can be adjusted by the composition of the resin constituting each layer and the film forming conditions (for example, draw ratio, stretching speed, stretching temperature, heat treatment temperature, heat treatment time). Here, the refractive index perpendicular to the plane refers to the refractive index in the direction perpendicular to the multi-layer laminated film surface. Examples of the composition of the resin constituting the A layer and the B layer include the compositions of the thermoplastic resin A and the thermoplastic resin B described above, but among them, it is preferable to use polyethylene terephthalate as the thermoplastic resin A and polyethylene terephthalate copolymerized with 15 mol% or more and 35 mol% or less of 2,6-naphthalene dicarboxylic acid relative to the total dicarboxylic acid components as the thermoplastic resin B.

From the viewpoint of the visibility of the background when projecting a P-wave image, the laminated film of the present invention, in which a P-wave average reflectance at a wavelength of 400 to 700 nm at an incident angle of 60° is 10% or more and 50% or less, preferably has an average transmittance of 50% or more and 100% or less at a wavelength of 400 to 700 nm at an incident angle of 10°. Since the average transmittance of light in the visible light range of wavelength 400 to 700 nm is high in this way, it has transparency like transparent glass or transparent resin film, and good visibility of the background can be obtained when observing the background through the laminated film from a direction perpendicular to the laminated film surface.

From the above viewpoint, the average transmittance is preferably 70% or more, more preferably 80% or more, and further preferably 85% or more. If the average transmittance is 85% or more, the user can visually recognize the background without hardly feeling the presence of the laminated film. The upper limit of the average transmittance is preferably 99% from the viewpoint of feasibility. Such a laminated film can be obtained by reducing the refractive index difference in the direction parallel to the film surface between the two thermoplastic resin layers. If the refractive index difference in the direction parallel to the film surface is 0.06 or less, it becomes easy to make the transmittance 50% or more, if it is 0.04 or less, to make the transmittance 70% or more, and if the refractive index difference is 0.02 or less, to make the transmittance 80% or more. Note that "refractive index difference in the direction parallel to the film surface" refers to the absolute value of the difference in in-plane refractive index between the A layer and the B layer.

Next, a preferred manufacturing method of the laminated film of the present invention will be described below, taking as an example a case where a crystalline polyester resin is used as the thermoplastic resin A (A layer) and an amorphous polyester resin is used as the thermoplastic resin B (B layer). Of course, the present invention should not be construed as being limited to such examples. In addition, the formation of the laminated configuration of the laminated film itself can be realized by referring to the description of paragraphs [0053] to [0063] of JP-A-2007-307893. The same interpretation applies to a laminated film composed of three types of layers further including a C layer.

The thermoplastic resin A and the thermoplastic resin B are prepared in the form of pellets or the like. If necessary, the pellets are dried in hot air or under vacuum, and then supplied to separate extruders. In the extruders, the thermoplastic resin A is heated and melted at a temperature equal to or higher than the melting point, and the thermoplastic resin B is heated and melted at a temperature within the range of the heating temperature of the thermoplastic resin A $\pm$ 30°C at which discharge unevenness does not occur. Next, the extrusion amount is equalized by a gear pump or the like, and the molten thermoplastic resin is extruded, and foreign substances and denatured resins are removed through a filter or the like. These molten thermoplastic resins are laminated into a desired layer configuration by a laminating apparatus, formed into a target sheet shape by a die, and then discharged onto a casting drum. Then, the molten sheet laminated in multiple layers discharged from the die is extruded onto a cooling body such as a casting drum to be cooled and solidified to obtain a casting film. At this time, it is preferable to use a wire-shaped, tape-shaped, needle-shaped, or knife-shaped electrode to adhere to the cooling body such as a casting drum by electrostatic force for rapid cooling and solidification. Also, a method of blowing air from a slit-shaped, spot-shaped, or planar device to adhere to a cooling body such as a casting drum for rapid cooling and solidification, or a method of adhering to a cooling body by a nip roll for rapid cooling and solidification is also preferable.

As the laminating apparatus, a multi-manifold die, a feed block, a static mixer, or the like can be used. In particular, in order to efficiently obtain the configuration of the present invention, it is preferable to use a feed block including at least two members having a large number of fine slits separately. When such a feed block is used, since the apparatus does not become extremely large, there are few foreign substances due to thermal degradation, and highly accurate lamination is possible even when the number of laminated layers is extremely large. In addition, the lamination accuracy in the width direction is significantly improved compared to the conventional technology. In this apparatus, since the thickness of each layer can be adjusted by the shape (length, width) of the slit, it is easy to achieve an arbitrary layer thickness.

After that, it is preferable to biaxially stretch the casting film thus obtained. Here, biaxial stretching refers to stretching in the longitudinal direction and the width direction. The stretching may be performed sequentially in two directions or simultaneously in two directions. Further, re-stretching may be performed in the longitudinal direction and/or the width direction. The longitudinal direction refers to the running direction of the film, and the width direction refers to the direction orthogonal to the longitudinal direction in the film plane.

First, the case of sequential biaxial stretching will be described. Here, stretching in the longitudinal direction (longitudinal stretching) refers to stretching for giving molecular orientation in the longitudinal direction to the film, and is usually performed by a peripheral speed difference of rolls. This stretching may be performed in one stage, or may be performed in multiple stages using a plurality of roll pairs. The draw ratio of stretching varies depending on the type of resin, but is usually preferably 2.0 to 9.0 times. When a copolymer resin of polyethylene naphthalate is used for any of the resins constituting the laminated film, 2.0 to 7.0 times is preferably used. Considering obtaining a laminated film comprising a reflection band having a width of 100 nm or more where a reflectance is 30% or more, and further having a heat shrinkage rate of 1.5% or more in at least one of the primary orientation direction and the direction orthogonal to the primary orientation direction under an atmosphere of 150°C, the longitudinal draw ratio is particularly preferably 3.0 times or more and 3.8 times or less. The stretching temperature is preferably in the range of the glass transition temperature to the glass transition temperature +100°C of the resin having the higher glass transition temperature among the resins constituting the laminated film.

The uniaxially stretched film thus obtained may be subjected to surface treatment such as corona treatment, flame treatment, plasma treatment, or the like as necessary, and then functions such as lubricity, easy adhesion, antistatic property, etc. may be imparted by in-line coating.

Stretching in the width direction (transverse stretching) refers to stretching for giving orientation in the width direction to the film. Usually, using a tenter, both ends of the uniaxially stretched film are held by clips and conveyed to be stretched in the width direction. The draw ratio of stretching varies depending on the type of resin, but is usually preferably 2.0 to 9.0 times. When a copolymer resin of polyethylene naphthalate is used for any of the resins constituting the laminated film, 2.0 to 7.0 times is preferably used. Considering obtaining a laminated film comprising a reflection band having a width of 100 nm or more where a reflectance is 30% or more, and further having a heat shrinkage rate of 1.5% or more and less than 4.0% in at least one of the primary orientation direction and the direction orthogonal to the primary orientation direction under an atmosphere of 150°C, the transverse draw ratio is particularly preferably 3.7 times or more and 4.2 times or less. From the above viewpoint, the in-plane draw ratio, which is the product of the longitudinal draw ratio and the transverse draw ratio, is preferably 11.0 times or more and 18.0 times or less, and more preferably 12.0 times or more and 18.0 times or less. The stretching temperature is preferably in the range of the glass transition temperature to the glass transition temperature +120°C of the resin having the higher glass transition temperature among the resins constituting the laminated film.

The biaxially stretched film thus obtained is preferably subjected to heat treatment in a tenter at a temperature not lower than the stretching temperature and not higher than the melting point of the thermoplastic resin A in order to impart flatness and dimensional stability. By performing the heat treatment, the dimensional stability of the obtained laminated film is improved. After being heat-treated in this way, the laminated film is preferably uniformly slowly cooled at a temperature equal to or higher than the glass transition temperature of the thermoplastic resin A and lower than the heat treatment temperature. More specifically, it is preferable to slowly cool at a temperature higher than 100°C and 200°C or lower, more preferably 130°C or higher and 180°C or lower, and further preferably 150°C or higher and 180°C or lower. After being slowly cooled, it is cooled to room temperature and wound up. In addition, additional stretching or relaxation treatment of 0.1% to 10% may be used in combination during the process from heat treatment to slow cooling.

In the laminated film of the present invention, it is preferable that the heat treatment temperature after stretching is equal to or lower than the melting point of the thermoplastic resin A and equal to or higher than the melting point of the thermoplastic resin B. In this case, while the thermoplastic resin A maintains a high orientation state, the orientation of the thermoplastic resin B is relaxed, so that a refractive index difference between the respective layers (A layer, B layer) mainly composed of these resins can be easily provided. When an amorphous resin is used for one of the thermoplastic resin A or the thermoplastic resin B, the heat treatment temperature is preferably equal to or lower than the melting point of the crystalline resin and in the range of the glass transition temperature to the glass transition temperature +120°C of the crystalline resin. When at least one of the thermoplastic resin A and the thermoplastic resin B is a crystalline polyester having a naphthalene dicarboxylic acid unit as a main constituent unit, from the viewpoint of controlling TA-TX and the heat shrinkage rate in at least one of the primary orientation direction and the direction orthogonal to the primary orientation direction under an atmosphere of 150°C to a suitable range, the heat treatment temperature is preferably 170°C or higher and lower than 220°C, more preferably 175°C or higher and 215°C or lower, further preferably 175°C or higher and 210°C or lower, and particularly preferably 175°C or higher and 200°C or lower. When an amorphous resin is used for the thermoplastic resin A and the thermoplastic resin B, the heat treatment step becomes unnecessary.

Next, the case of simultaneous biaxial stretching will be described. In the case of simultaneous biaxial stretching, the obtained cast film may be subjected to surface treatment such as corona treatment, flame treatment, plasma treatment, or the like as necessary, and then functions such as lubricity, easy adhesion, antistatic property, etc. may be imparted by in-line coating.

Next, the cast film is guided to a simultaneous biaxial tenter while holding both ends in the width direction with clips, conveyed, and stretched simultaneously and/or stepwise in the longitudinal direction and the width direction. As the simultaneous biaxial stretching machine, there are a pantograph type, a screw type, a drive motor type, and a linear motor type, but a drive motor type or a linear motor type in which the draw ratio can be changed arbitrarily and relaxation treatment can be performed at an arbitrary place is preferable. The draw ratio of stretching varies depending on the type of resin, but usually, the area ratio is preferably 6.0 to 30.0 times. When a copolymer resin of polyethylene naphthalate is used for any of the resins constituting the laminated film, 9.0 to 18.0 times is particularly preferably used as the area ratio. Particularly in the case of simultaneous biaxial stretching, in order to suppress the in-plane orientation difference, it is preferable to make the draw ratios in the longitudinal direction and the width direction the same and to make the stretching speeds substantially equal. The stretching temperature is preferably in the range of the glass transition temperature to the glass transition temperature +120°C of the resin having the higher glass transition temperature among the resins constituting the laminated film.

The film biaxially stretched in this way is subjected to heat treatment, slow cooling, and cooling to room temperature and wound up in the same manner as in the case of sequential biaxial stretching. In the heat treatment, in order to suppress the distribution of the main orientation axis in the width direction, it is preferable to perform relaxation treatment instantaneously in the longitudinal direction immediately before and/or immediately after entering the heat treatment zone.

Next, the laminate and laminated glass of the present invention will be described. The laminate of the present invention comprises a support 1, an intermediate layer 1, the laminated film of the present invention, an intermediate layer 2, and a support 2 in this order. Among the laminates of the present invention, the one in which the support 1 and the support 2 are both made of glass is the laminated glass of the present invention. The laminate and laminated glass of the present invention may include a plurality of the above members as long as the above members are located in this order, and other members may exist between the above members. The support 1 and the support 2 may be the same member or different members, and the same applies to the intermediate layer 1 and the intermediate layer 2. Such a molded body or laminated glass is excellent in strength. Particularly, regarding laminated glass, compared to pair glass (double-glazed glass) having an air layer between two sheets of glass, it has a feature of suppressing scattering of glass and penetration of an object when an object collides with the glass surface. Therefore, the laminated glass of the present invention is suitable for use in applications requiring safety and crime prevention, such as window glass for automobiles and buildings. Further, by providing the laminated film of the present invention in the laminated glass, it becomes possible to impart functions such as a heat ray-shielding function, a half mirror function, and a color filter function to the laminated glass.

A laminate using the laminated film of the present invention comprises a support 1, an intermediate layer 1, the laminated film of the present invention, an intermediate layer 2, and a support 2 in this order. The support 1 and the support 2 play a role of increasing the strength of the laminate. Examples of the support for obtaining the laminate of the present invention include resin, metal, glass, ceramic, and the like. The surface of the support may be flat or curved, and may take any shape. Examples of the resin used for the supports 1 and 2 include acrylic resins such as polycarbonate, cyclic polyolefin, polyarylate, polyethylene terephthalate, and polymethyl methacrylate, ABS resin, triacetyl cellulose, and the like. Examples of the glass used for the supports 1 and 2 include float glass, tempered glass, colored glass, heat-shielding glass, and the like. Assuming that the supports 1 and 2 are used for heat ray reflection applications or projection member applications of head-up displays, they are preferably transparent. The thickness of the support is preferably 0.05 mm to 5 mm from the viewpoint of achieving both strength security and weight suppression.

The intermediate layers 1 and 2 play a role of adhering the laminated film of the present invention and the supports 1 and 2, and an adhesive layer or a film layer is preferable. Examples of the adhesive include vinyl acetate resin based, vinyl chloride-vinyl acetate copolymer based, ethylene-vinyl acetate copolymer based, polyvinyl alcohol, polyvinyl butyral, polyvinyl acetal, polyvinyl ether, nitrile rubber based, styrene-butadiene rubber based, natural rubber based, chloroprene rubber based, polyamide based, epoxy resin based, polyurethane based, acrylic resin based, cellulose based, polyvinyl chloride, polyacrylic acid ester, polyisobutylene, and the like. Those in the form of a film or formed on the film surface can also be used instead of the adhesive. In addition, a tackifier, a plasticizer, a heat stabilizer, an antioxidant, an ultraviolet absorber, an antistatic agent, a lubricant, a coloring agent, a crosslinking agent, and the like may be added to these adhesives.

By providing the intermediate layer, functions such as adhesion between the support 1 or 2 and the laminated film of the present invention, design of the laminate, durability, weather resistance, and impact resistance can be enhanced. As a method for enhancing the design of the laminate, there is addition of a coloring agent to the intermediate layer. Examples of the coloring agent include azo pigments, polycyclic pigments, lake pigments, nitro pigments, nitroso pigments, aniline black, alkali blue, phthalocyanine pigments, cyanine pigments, azo dyes, anthraquinone dyes, quinophthalone dyes, methine dyes, condensed polycyclic dyes, reactive dyes, cationic dyes, lanthanum hexaboride, indium tin oxide, antimony tin oxide, cesium tungsten oxide, and the like. From the viewpoint of improving processability and adhesion as an intermediate layer, the thickness of the intermediate layer is preferably 10 μm to 1 mm

Examples of the molding method for obtaining the laminate include extrusion lamination, hot melt lamination, thermal lamination, press lamination, vacuum lamination, autoclave lamination, and the like. Extrusion lamination is a method in which a molten resin composition for obtaining a laminated film and an intermediate layer is extruded into a film shape from a die and laminated on a support, and the molded article is passed between two rolls for molding. Hot melt lamination is a molding method in which a resin composition for forming an intermediate layer melted by heat is applied to a laminated film or a support, and the laminated film and the support are laminated. Thermal lamination is a molding method in which a laminated film, a sheet for an intermediate layer, and a support are laminated by pressure bonding while heating with a heating roll. Press lamination is a molding method in which a laminated film, a sheet for an intermediate layer, and a support are heated and pressure-bonded by a press machine for lamination. Vacuum lamination is a molding method in which a laminated film, a sheet for an intermediate layer, and a support are heated, and then the inside of the apparatus is evacuated and pressed for lamination. Autoclave lamination is a lamination method in which a laminated film, a sheet for an intermediate layer, and a support are heated, and then the inside of the apparatus is pressurized with gas or the like for lamination.

EXAMPLES

Hereinafter, the laminated film of the present invention will be described more specifically with reference to examples. However, the laminated film of the present invention is not limited to the embodiments shown below.

[Method of measuring physical properties and method of evaluating effects]

The method for evaluating characteristic values and the method for evaluating effects are as follows.

(1) Layer thickness, number of laminated layers, laminated configuration

The laminated configuration of the laminated film, the specification of the number of laminated layers, and the measurement of the thickness of each layer were performed by observation with a transmission electron microscope (TEM) and its length measuring function using a sample cut out of a cross section using a microtome. Specifically, using a transmission electron microscope H-7100FA type (manufactured by Hitachi, Ltd.), the cross section of the film was magnified 10,000 to 40,000 times under the condition of an acceleration voltage of 75 kV to take a cross-sectional photograph, and the layer configuration and the number of laminated layers were specified, and each layer thickness was measured. In some cases, a known dyeing technique using $RuO_4$, $OsO_4$, or the like was used to enhance the contrast between layers.

(2) Reflectance, Transmittance

Using a sample cut out in a size of 5 cm × 5 cm, reflectance and transmittance were measured under the following measurement conditions by a basic configuration using an integrating sphere attached to a spectrophotometer (U-4100 Spectrophotometer) manufactured by Hitachi, Ltd. In the reflectance measurement, the sample was placed behind the integrating sphere with the longitudinal direction being the vertical direction, and the reflectance was calculated as a relative reflectance based on the aluminum oxide secondary white plate attached to the apparatus. The average reflectance at a wavelength of 900 to 1200 nm was a value obtained by averaging all reflectances every 1 nm, and the measurement was performed on both surfaces of the sample, and the measurement result of the surface having the higher average reflectance at a wavelength of 900 to 1200 nm was adopted. In the transmittance measurement, the sample was placed in front of the integrating sphere with the longitudinal direction being the vertical direction. The average transmittance at a wavelength of 400 to 700 nm was a value obtained by averaging all transmittances every 1 nm, and the measurement was performed on both surfaces of the sample, and the measurement result of the surface having the higher average transmittance at a wavelength of 400 to 700 nm was adopted.

<Measurement Conditions>

Slit: 2 nm (visible) / automatic control (infrared)
Gain: 2

Scanning speed: 600 nm/min
Start wavelength: 2600 nm
End wavelength: 240 nm
Sampling interval: 1 nm
Incident angle: 10°

(3) Reflectance of P wave at 60°

An angle variable reflection unit and a Glan-Taylor polarizer attached to a spectrophotometer (U-4100 Spectrophotometer) manufactured by Hitachi, Ltd. were attached, and the reflectance of P waves in the wavelength range of 400 to 700 nm at an incident angle θ = 60° with respect to an azimuth angle direction of 60° clockwise with reference to an azimuth angle of 0° in the primary orientation direction of the film surface was measured in 1 nm increments. From the obtained reflectance, the reflectance of the P wave at 60° was determined as the average reflectance of the P wave in the wavelength range of 400 nm to 700 nm at an incident angle of 60° in each azimuth angle direction.

<Measurement Conditions>

Slit: 2 nm (visible) / automatic control (infrared)
Gain: 2
Scanning speed: 600 nm/min
Start wavelength: 700 nm
End wavelength: 400 nm
Sampling interval: 1 nm

(4) Melting point, glass transition temperature TA, crystallization temperature, amount of crystal melting heat

5 g of a sample was collected, and the melting point, glass transition temperature, crystallization temperature, and amount of crystal melting heat were measured and calculated according to JIS-K-7121 (1987) using a differential scanning calorimeter (Robot DSC-RDC220 manufactured by Seiko Instruments Inc.). When there were a plurality of glass transition temperatures, the higher temperature was defined as the glass transition temperature TA. In the measurement, the sample was heated from 25°C to 290°C at 5°C/min.

(5) Internal Haze

Three square laminated film samples with a side of 5 cm were prepared and left for 40 hours under a normal state (23°C, 50% relative humidity) environment. Thereafter, the internal haze of each sample was measured according to JIS-K-7105 (1981) using a turbidity meter "NDH5000" manufactured by Nippon Denshoku Industries Co., Ltd. The measurement was performed in a state where the sample was placed in a quartz cell filled with liquid paraffin in order to remove light scattering due to irregularities on the surface of the laminated film sample. The measured values of the internal haze of each sample were averaged to obtain the internal haze of the laminated film.

(6) Appearance of laminate

(Preparation of laminate)

Nisshinbo LAMINATOR 0303S was used for the preparation of the laminate. First, plate glass having a thickness of 3 mm and a size of 10 cm square was stacked as a support on both sides of the laminated film, and PVB (polyvinyl butyral) having a thickness of 0.76 mm was placed as an interlayer between the laminated film and the support, respectively. The member thus laminated was heated from 25°C to 150°C at 3°C/min, then depressurized at 600 mmHg for 5 minutes, and pressed for 30 minutes at a pressure of 0.1 MPa. Thereafter, it was slowly cooled at 3°C/min until it reached 35°C while being pressed, and the press was released to obtain a laminate (150°C). Further, a laminate (120°C) was obtained under the same conditions except that the temperature was raised from 25°C to 120°C at 3°C/min.

(Evaluation of color unevenness)

A straight tube type white three-wavelength fluorescent lamp and the laminate were arranged horizontally to the primary orientation direction, and fixed at a position 30 cm away in the normal direction. The evaluation part was visually evaluated from angles of 20°, 50°, and 70° with respect to the normal direction of the evaluation part. The evaluation criteria are as follows, and S and A were regarded as good results.

S: No color unevenness was visible when observed from any angle.
A: Color unevenness was slightly visible when observed from at least one angle, but clear color unevenness was not visible on a part or the whole of the molded body when observed from any angle.
C: Clear color unevenness was visible on a part or the whole of the molded body when observed from at least one angle.

(Appearance evaluation)

A straight tube type white three-wavelength fluorescent lamp and the laminate were arranged horizontally to the primary orientation direction, and fixed at a position 30 cm away in the normal direction. The evaluation part was visually evaluated from angles of 20°, 50°, and 70° with respect to the normal direction of the evaluation part. The evaluation criteria are as follows, and S and A were regarded as good results. The same observation was made when the direction orthogonal to the primary orientation direction and the fluorescent lamp were arranged horizontally. S: No wrinkles or irregularities were visible when observed from any angle. A: Wrinkles or irregularities were slightly visible when observed from at least one angle, but clear wrinkles or irregularities were not visible on a part or the whole of the molded body when observed from any angle. C: Clear wrinkles or irregularities were visible on a part or the whole of the molded body when observed from at least one angle.

(7) Specification of primary orientation direction

The sample size of the laminated film was 10 cm × 10 cm, and the sample was cut out at the center in the film width direction. The degree of orientation was measured using a molecular orientation meter MOA-2001 manufactured by KS Systems Co., Ltd. (currently Oji Scientific Instruments Co., Ltd.), and the direction with the largest degree of orientation was defined as the primary orientation direction.

(8) Shrinkage onset temperature TX, TY

A laminated film sample was cut into a rectangular shape of 40 mm in the primary orientation direction (measurement direction) × 4 mm in the direction orthogonal to the primary orientation direction, and measured under the following measurement conditions using "TMA SS6100" manufactured by Hitachi High-Tech Science Corporation.

<Measurement Conditions>

Temperature rise temperature: 25°C to 200°C
Temperature rise rate: 10°C/min
Hold time: 10 minutes
Sampling: 2 seconds

Then, from the output displacement amount TMA value, the temperature at which the value changed from a positive value to a negative value in the range of 40 to 150°C was defined as the shrinkage onset temperature TX. When the TMA value at 40°C was negative, the shrinkage onset temperature TX was 40°C, and when there were a plurality of temperatures changing from a positive value to a negative value, the lowest temperature was defined as the shrinkage onset temperature TX. This measurement was performed 5 times, and the average value was adopted as the shrinkage onset temperature TX. The shrinkage onset temperature TY was measured in the same manner by cutting out a sample into a rectangular shape of 40 mm in the direction orthogonal to the primary orientation direction (measurement direction) × 4 mm in the primary orientation direction.

(9) Heat shrinkage rate (under 150°C atmosphere, under 120°C atmosphere)

A sample was cut out in a rectangular size of 150 mm (measurement direction) × 10 mm, and marks were made at intervals of 100 mm in the measurement direction of the sample. The interval between the marks was measured using a universal projector (Model V-16A) manufactured by Nikon Corporation, and the value was defined as A. Next, the sample was suspended in a gear oven with a load of 3 g applied, and left for 30 minutes in an atmosphere of 150°C or 120°C. Next, after taking out the sample and cooling it, the interval between the previously made marks was measured and defined as B, and the heat shrinkage rate in the measurement direction was determined from the following formula (4). The measurement directions were the primary orientation direction and the direction orthogonal to the primary orientation direction, the number n was 3 for each direction, and the average value thereof was adopted as the value of the heat shrinkage rate.

$$\text{Heat shrinkage rate (\%)} = 100 \times (A - B) / A \text{ ... Formula (4).}$$

(10) In-plane refractive index of surface (A layer)

The in-plane refractive index of the surface layer (A layer) was measured using "SPA-4000" manufactured by SAIRON TECHNOLOGY, INC. under the following measurement conditions. The average value of the refractive index in the primary orientation direction and the refractive index in the direction orthogonal to the primary orientation direction of the laminated polyester film sample was defined as the in-plane refractive index. The primary orientation direction was specified by the method of (7), and the direction orthogonal to the primary orientation direction was a direction orthogonal to the primary orientation direction in the film plane.

    Laser: wavelength 632.8 nm
    Prism: GGG prism.

(11) In-plane refractive index of B layer

Since the B layer is a layer inside the laminated film, measurement was performed not on the film itself but on a single-layer film of the B layer prepared under the same stretching conditions and heat treatment conditions as the film, using "SPA-4000" manufactured by SAIRON TECHNOLOGY, INC. under the following measurement conditions. However, unlike the resin of the A layer, the resin of the B layer is amorphous, and the degree of orientation does not change by stretching and there is no primary orientation direction, so the average value of the refractive index in the longitudinal direction and the refractive index in the width direction of the single-layer film was defined as the in-plane refractive index.

    Laser: wavelength 632.8 nm
    Prism: GGG prism.

(12) Head-up display evaluation

A display (SP-133CM) manufactured by Dream Maker was used as a light source. The projection image display member was installed so that the light from the light source had an incident angle of 60° with respect to the normal direction of the projection image display member surface, and an image was projected from the light source onto the projection image display member by P wave or S wave. Thereafter, the display property of the projected image was visually evaluated.

(Evaluation criteria for display property of projected image)

    S: The projected image was very bright.
    A: The projected image was bright.
    C: The projected image was dark.

[Resin used for production of laminated film]

For the production of the laminated film, the following resins were used as resins for the A layer and the B layer.

(Resin for A layer)

PEN (1): Polyethylene 2,6-naphthalate copolymerized with 4 mol% of polyethylene glycol having an average molecular weight of 400 with respect to all diol structural components (intrinsic viscosity: 0.64, melting point: 260°C, glass transition temperature: 104°C).

PEN (2): Polyethylene 2,6-naphthalate copolymerized with 6 mol% of polyethylene glycol having an average molecular weight of 400 with respect to all diol structural components (intrinsic viscosity: 0.64, melting point: 255°C, glass transition temperature: 97°C).

PET (2): Polyethylene terephthalate (intrinsic viscosity: 0.65, melting point: 254°C, glass transition temperature: 78°C).

(Resin for B layer)

PET (1): A mixture of a polyethylene terephthalate resin copolymerized with 31 mol% of cyclohexanedimethanol (CHDM) relative to all diol structural components (intrinsic viscosity: 0.73, amorphous resin (no melting point), glass transition temperature: 79°C) and polyethylene terephthalate (manufactured by Toray Industries, Inc., intrinsic viscosity: 0.65, melting point: 256°C, glass transition temperature: 80°C) mixed at a mass ratio of 82:18 (melting point 225°C, glass transition temperature: 79°C).

PET (3): A polyethylene terephthalate resin copolymerized with 30 mol% of 2,6-naphthalenedicarboxylic acid relative to all dicarboxylic acid structural components (intrinsic viscosity: 0.67, no melting point, glass transition temperature: 95°C).

(Example 1)

PEN (1) was used as the polyester resin (thermoplastic resin A) forming the A layer, and PET (1) was used as the polyester resin (thermoplastic resin B) forming the B layer. The polyester resins forming each layer were each brought into a molten state at 280°C in a twin-screw extruder with a vent, and then merged in a feed block of 449 layers via a gear pump and a filter, and 449 layers of molten thermoplastic resin A and thermoplastic resin B were alternately laminated in the thickness direction so that the outermost layers on both sides were the A layers. Thereafter, the obtained molten laminate was guided to a T-die, formed into a sheet shape, and discharged, and the molten sheet-like material was rapidly cooled and solidified on a casting drum with a surface temperature of 25°C by electrostatic application to obtain a cast film. At this time, the discharge amount was adjusted so that the mass ratio of the thermoplastic resin A and the thermoplastic resin B was about 1:1. Next, the obtained cast film was heated by a group of rolls set to a temperature of the glass transition temperature of the thermoplastic resin A + 10°C, and then stretched 3.2 times in the longitudinal direction (machine direction) while being rapidly heated by a radiation heater from both sides within a stretching section length of 100 mm, and then cooled once. Thereafter, both surfaces of this uniaxially stretched film were subjected to corona discharge treatment in air to set the wetting tension to 55 mN/m, and a laminated film coating liquid composed of (polyester resin having a glass transition temperature of 18°C) / (polyester resin having a glass transition temperature of 82°C) / silica particles having an average particle diameter of 100 nm was applied to both surfaces to form a transparent and easily adhesive layer having lubricity. This uniaxially stretched film was guided to a tenter by gripping both ends in the width direction with clips, preheated with hot air at 100°C, and then stretched 4.0 times in the transverse direction (width direction) at a uniform stretching speed at a temperature of the glass transition temperature of the thermoplastic resin A + 20°C. Further, in the same tenter, the stretched film was heat-treated with hot air at 195°C, subjected to 1% relaxation treatment in the width direction at the same temperature, and then subjected to 1% additional stretching in the width direction in a cooling zone at a temperature of 150°C, slowly cooled to room temperature, and wound up. The winder draw was 98%. Note that the winder draw is the ratio of the tenter speed to the winder winding speed, and a winder draw of 98% indicates that the tenter speed is 2% slower than the winder winding speed. The thickness of the obtained laminated film was 90 μm. The evaluation results are shown in Tables 2-1, 2-2, Tables 4-1, and 4-2.

(Examples 2 to 17, Comparative Examples 1 to 7)

Laminated films were produced under the same conditions as in Example 1, except that the resin used for each layer, the number of laminated layers, the film forming conditions, and the thickness were changed as shown in Tables 1, 2-1, 2-2, 3, 4-1, and 4-2. The evaluation results of the obtained laminated films are shown in Tables 2-1, 2-2, 4-1, and 4-2. The number of laminated layers was adjusted by adjusting the number of slits in the feed block, and the thickness was adjusted by changing the speed of the entire film forming line linked to the casting drum speed.

[Table 1]

| | Resin A | Resin B | Number of laminated layers | Film forming conditions | | | | | | |
|---|---|---|---|---|---|---|---|---|---|---|
| | | | | Draw ratio (MD) | Draw ratio (TD) | Heat treatment temperature | Cooling temperature | Cooling relexation treatment | Winder draw |
| | | | | Times | Times | °C | °C | % | % |
| Example 1 | PEN(1) | PET(1) | 449 | 3.2 | 4.0 | 195 | 150 | 1 | 98 |
| Example 2 | PEN(1) | PET(1) | 51 | 3.2 | 4.0 | 195 | 150 | 1 | 98 |
| Example 3 | PEN(1) | PET(1) | 449 | 3.2 | 4.0 | 195 | 150 | 0.6 | 98 |
| Example 4 | PEN(1) | PET(1) | 449 | 3.2 | 4.0 | 195 | 150 | 0.3 | 98 |
| Example 5 | PEN(1) | PET(1) | 449 | 3.2 | 4.0 | 205 | 150 | 0.6 | 98 |
| Example 6 | PEN(1) | PET(1) | 449 | 3.2 | 4.0 | 215 | 150 | 0.6 | 98 |
| Example 7 | PEN(1) | PET(1) | 449 | 3.2 | 4.0 | 205 | 130 | 0.6 | 98 |
| Example 8 | PEN(1) | PET(1) | 449 | 3.2 | 4.0 | 205 | 180 | 0.6 | 98 |
| Example 9 | PEN(1) | PET(1) | 449 | 3.2 | 4.0 | 205 | 150 | 0.6 | 100 |
| Example 10 | PEN(1) | PET(1) | 449 | 3.6 | 4.0 | 205 | 150 | 0.6 | 98 |
| Example 11 | PEN(1) | PET(1) | 449 | 3.2 | 3.6 | 205 | 150 | 0.6 | 98 |
| Example 12 | PEN(1) | PET(1) | 449 | 2.8 | 3.6 | 205 | 150 | 0.6 | 98 |
| Example 13 | PEN(2) | PET(1) | 449 | 3.2 | 4.0 | 195 | 150 | 1 | 98 |
| Example 14 | PEN(2) | PET(1) | 449 | 3.2 | 4.0 | 215 | 150 | 0.6 | 98 |
| Example 15 | PET(2) | PET(1) | 449 | 3.2 | 4.0 | 215 | 150 | 1 | 98 |
| Example 16 | PET(2) | PET(3) | 449 | 3.2 | 4.0 | 215 | 150 | 1 | 98 |
| Example 17 | PET(2) | PET(3) | 449 | 3.2 | 4.0 | 205 | 150 | 1 | 98 |

[Table 2-1]

| | | Film characteristics | | | | | | Heat shrinkage rate under TA atmosphere | |
|---|---|---|---|---|---|---|---|---|---|
| | Thickness | TA | TX | TY | TA-TX | TA-TY | Difference between TY and TX | Primary orientation direction | Direction orthogonal to the primary orientation direction |
| | μm | °C | °C | °C | °C | °C | °C | % | % |
| Example 1 | 90 | 104 | 88 | 95 | 16 | 9 | 7 | 1.1 | 0.9 |
| Example 2 | 20 | 104 | 86 | 93 | 18 | 11 | 7 | 1.1 | 0.9 |
| Example 3 | 90 | 104 | 93 | 94 | 11 | 10 | 1 | 0.7 | 0.9 |
| Example 4 | 90 | 104 | 97 | 93 | 7 | 11 | 4 | 0.5 | 0.8 |
| Example 5 | 90 | 104 | 95 | 110 | 9 | -6 | 15 | 0.6 | 0.7 |
| Example 6 | 90 | 104 | 98 | 115 | 6 | -11 | 17 | 0.5 | 0.5 |
| Example 7 | 90 | 104 | 97 | 105 | 7 | -1 | 8 | 0.5 | 0.5 |
| Example 8 | 90 | 104 | 93 | 93 | 11 | 11 | 0 | 0.6 | 1.0 |
| Example 9 | 90 | 104 | 93 | 94 | 11 | 10 | 1 | 0.6 | 1.0 |
| Example 10 | 90 | 104 | 94 | 94 | 10 | 10 | 0 | 0.6 | 1.0 |
| Example 11 | 90 | 104 | 96 | 98 | 8 | 6 | 2 | 0.4 | 0.8 |
| Example 12 | 90 | 104 | 98 | 105 | 6 | -1 | 7 | 0.4 | 0.5 |
| Example 13 | 90 | 97 | 82 | 89 | 15 | 8 | 7 | 1.1 | 1.0 |
| Example 14 | 90 | 97 | 88 | 89 | 9 | 8 | 1 | 0.6 | 0.6 |
| Example 15 | 90 | 79 | 74 | 78 | 5 | 1 | 4 | 0.3 | 0.3 |
| Example 16 | 90 | 79 | 72 | 78 | 7 | 1 | 6 | 0.3 | 0.3 |
| Example 17 | 90 | 79 | 70 | 77 | 9 | 2 | 7 | 0.4 | 0.3 |

| | | Film characteristics | | | | | | |
|---|---|---|---|---|---|---|---|---|
| | | Heat shrinkage rate under 150°C atmosphere | | Heat shrinkage rate under 120°C atmosphere | | S(150)/S(TA) | S(120)/S(TA) | Reflection band where reflectance is 30% or more |
| | | Primary orientation direction | Direction orthogonal to the primary orientation direction | Primary orientation direction | Direction orthogonal to the primary orientation direction | | | |
| | | % | % | % | % | - | - | nm |
| Example 1 | | 3.2 | 2.9 | 1.6 | 1.5 | 3.1 | 1.6 | 900-1200 |
| Example 2 | | 3.4 | 3.0 | 1.6 | 1.5 | 3.2 | 1.6 | 900-1000 |
| Example 3 | | 3.3 | 3.0 | 1.4 | 1.4 | 3.9 | 1.8 | 900-1200 |
| Example 4 | | 3,3 | 3.0 | ct | 1.5 | 4.6 | 2.3 | 900-1200 |
| Example 5 | | 2.3 | 2.1 | 1.1 | 1.2 | 3.4 | 1.8 | 900-1200 |
| Example 6 | | 1.6 | 1.5 | 0.8 | 0.8 | 3.1 | 1.6 | 900-1200 |
| Example 7 | | 2.4 | 2.2 | 0.7 | 0.8 | 4.6 | 1.5 | 900-1200 |
| Example 8 | | 2.3 | 2.5 | 1.1 | 1.5 | 3.0 | 1.6 | 900-1200 |
| Example 9 | | 2.3 | 2.4 | 1.1 | 1.4 | 2.9 | 1.6 | 900-1200 |
| Example 10 | | 2.4 | 2.4 | 1.1 | 1.4 | 3.0 | 1.6 | 900-1200 |
| Example 11 | | 2.0 | 2.3 | 1.1 | 1.4 | 3.6 | 2.1 | 900-1200 |
| Example 12 | | 1.9 | 1.6 | 0.8 | 0.8 | 3.9 | 1.8 | 900-1200 |
| Example 13 | | 3.4 | 3.0 | 1.6 | 1.6 | 3.0 | 1.5 | 900-1200 |
| Example 14 | | 1.8 | 1.6 | 0.8 | 0.8 | 2.8 | 1.3 | 900-1200 |
| Example 15 | | 2.4 | 2.2 | 1.8 | 1.3 | 7.7 | 5.2 | 900-1200 |
| Example 16 | | 2.3 | 2.2 | 1.7 | 1.3 | 7.5 | 5.0 | - |
| Example 17 | | 3.2 | 3.0 | 1.2 | 1.3 | 8.9 | 3.6 | - |

[Table 2-2]

| | Film characteristics | | | | | | | |
| --- | --- | --- | --- | --- | --- | --- | --- | --- |
| | Reflection band where reflectance is continuously 50% or more (wavelength 900-1200 nm) | Average reflectance at wavelength of 900-1200 nm | In-plane refractive index of surface | Defference in in-plane refractive indecies of A layer and B layer | Difference in refractive indeces perpendicular to plane between A layer and B layer | P-wave average reflectance at 60° (400-700nm) | Average transmittance at 10° (400-700 nm) | Internal haze |
| | nm | % | - | - | - | % | % | % |
| Example 1 | 900-1200 | 82 | 1.73 | 0.17 | 0.07 | 1 | 90 | 0.4 |
| Example 2 | 900-1000 | 26 | 1.73 | 0.17 | 0.07 | 1 | 90 | 0.3 |
| Example 3 | 900-1200 | 82 | 1.73 | 0.17 | 0.07 | 1 | 90 | 0.4 |
| Example 4 | 900-1200 | 82 | 1.73 | 0.17 | 0.07 | 1 | 90 | 0.4 |
| Example 5 | 900-1200 | 83 | 1.73 | 0.17 | 0.07 | 1 | 90 | 0.4 |
| Example 6 | 900-1200 | 83 | 1.73 | 0.17 | 0.07 | 0 | 90 | 0.4 |
| Example 7 | 900-1200 | 82 | 1.73 | 0.17 | 0.07 | 1 | 90 | 0.4 |
| Example 8 | 900-1200 | 81 | 1.73 | 0.17 | 0.07 | 1 | 90 | 0.4 |
| Example 9 | 900-1200 | 82 | 1.73 | 0.17 | 0.07 | 1 | 90 | 0.4 |
| Example 10 | 900-1200 | 82 | 1.73 | 0.17 | 0.07 | 1 | 90 | 0.4 |
| Example 11 | 900-1200 | 82 | 1.73 | 0.17 | 0.07 | 1 | 90 | 0.4 |

EP 4 778 719 A1

| | Film characteristics | | | | | | | |
|---|---|---|---|---|---|---|---|---|
| | Reflection band where reflectance is continuously 50% or more (wavelength 900-1200 nm) | Average reflectance at wavelength of 900-1200 nm | In-plane refractive index of surface | Defference in in-plane refractive indecies of A layer and B layer | Difference in refractive indeces perpendicular to plane between A layer and B layer | P-wave average reflectance at 60° (400-700nm) | Average transmittance at 10° (400-700 nm) | Internal haze |
| | nm | % | - | - | - | % | % | % |
| Example 12 | 900-1200 | 78 | 1.72 | 0.16 | 0.07 | 1 | 90 | 0.4 |
| Example 13 | 900-1200 | 81 | 1.73 | 0.16 | 0.08 | 0 | 90 | 0.4 |
| Example 14 | 900-1200 | 80 | 1.73 | 0.16 | 0.08 | 0 | 90 | 0.4 |
| Example 15 | 900-1050 | 52 | 1.66 | 0.09 | 0.07 | 0 | 91 | 0.4 |
| Example 16 | - | - | 1.66 | 0.02 | 0.13 | 25 | 87 | 0.5 |
| Example 17 | - | - | 1.66 | 0.02 | 0.11 | 21 | 87 | 0.5 |

EP 4 778 719 A1

| | Evaluation of laminates | | | | | | Head-up display evaluation |
|---|---|---|---|---|---|---|---|
| | 150°C | | | 120°C | | | |
| | Color Unevenness | Outer Appearance (primary orientation direction) | Outer Appearance (direction orthogonal to primary orientation direction) | Color Unevenness | Outer Appearance (primary orientation direction) | Outer Appearance (direction orthogonal to primary orientation direction) | |
| Example 1 | A | S | A | S | S | S | C |
| Example 2 | A | S | S | S | S | S | C |
| Example 3 | A | S | S | S | S | S | C |
| Example 4 | S | A | S | S | A | A | C |
| Example 5 | S | A | C | S | S | S | C |
| Example 6 | S | A | C | S | S | S | C |
| Example 7 | S | A | C | S | S | S | C |
| Example 8 | S | S | S | S | S | S | C |
| Example 9 | S | S | S | S | S | S | C |
| Example 10 | S | S | S | S | S | S | C |
| Example 11 | S | A | A | S | A | A | C |
| Example 12 | S | A | C | S | S | S | C |
| Example 13 | A | S | A | S | S | S | C |
| Example 14 | S | A | A | S | C | C | C |
| Example 15 | S | A | C | S | C | C | C |
| Example 16 | A | A | C | A | A | A | S |
| Example 17 | A | A | C | A | A | A | A |

[Table 3]

| | Resin A | Resin B | Number of laminated layers | Film forming conditions | | | | | | |
|---|---|---|---|---|---|---|---|---|---|---|
| | | | | Draw ratio (MD) | Draw ratio (TD) | Heat treatment temperature | Cooling temperature | Cooling relexation treatment | Winder draw |
| | | | | Times | Times | °C | °C | % | % |
| Comparative Example 1 | PEN(1) | PET(1) | 3 | 3.2 | 4.0 | 195 | 150 | 1 | 98 |
| Comparative Example 2 | PEN(1) | PET(1) | 449 | 3.2 | 4.0 | 195 | 150 | 0 | 98 |
| Comparative Example 3 | PEN(1) | PET(1) | 449 | 3.2 | 4.0 | 220 | 150 | 0.6 | 98 |
| Comparative Example 4 | PEN(1) | PET(1) | 449 | 3.2 | 4.0 | 205 | 100 | 0.6 | 98 |
| Comparative Example 5 | PET(2) | PET(1) | 449 | 3.2 | 4.0 | 215 | 150 | 0 | 98 |
| Comparative Example 6 | PET(2) | PET(3) | 449 | 3.2 | 4.0 | 215 | 150 | 0 | 98 |
| Comparative Example 7 | PET(2) | PET(3) | 449 | 3.2 | 4.0 | 205 | 100 | 0.6 | 98 |

[Table 4-1]

| | Film characteristics | | | | | | | | |
|---|---|---|---|---|---|---|---|---|---|
| | | | | | | | | Heat shrinkage rate under TA atmosphere | |
| | Thickness | TA | TX | TY | TA-TX | TA-TY | Difference between TY and TX | Primary orientation direction | Direction orthogonal to the primary orientation direction |
| | μm | °C | °C | °C | °C | °C | °C | % | % |
| Comparative Example 1 | 90 | 104 | 86 | 92 | 18 | 12 | 6 | 1.1 | 0.9 |
| Comparative Example 2 | 90 | 104 | 100 | 93 | 4 | 11 | 7 | 0.3 | 0.4 |
| Comparative Example 3 | 90 | 104 | 101 | 118 | 3 | -14 | 17 | 0.4 | 0.4 |
| Comparative Example 4 | 90 | 104 | 100 | 124 | 4 | -20 | 24 | 0.3 | 0.4 |
| Comparative Example 5 | 90 | 79 | 87 | 95 | -8 | -16 | 8 | 0.1 | 0.2 |
| Comparative Example 6 | 90 | 79 | 86 | 94 | -7 | -15 | 8 | 0.1 | 0.3 |
| Comparative Example 7 | 90 | 79 | 80 | 94 | -1 | -15 | 14 | 0.1 | 0.3 |

| | Film characteristics | | | | | | |
|---|---|---|---|---|---|---|---|
| | Heat shrinkage rate under 150°C atmosphere | | Heat shrinkage rate under 120°C atmosphere | | S(150)/S(TA) | S(120)/S(TA) | Reflection band where reflectance is 30% or more |
| | Primary orientation direction | Direction orthogonal to the primary orientation direction | Primary orientation direction | Direction orthogonal to the primary orientation direction | | | |
| | % | % | % | % | - | - | nm |
| Comparative Example 1 | 3.2 | 3.0 | 1.6 | 1.4 | 3.1 | 1.5 | - |
| Comparative Example 2 | 3.2 | 3.0 | 0.5 | 1.5 | 8.9 | 2.9 | 900-1200 |
| Comparative Example 3 | 1.4 | 1.3 | 0.6 | 0.6 | 3.4 | 1.5 | 900-1200 |
| Comparative Example 4 | 2.4 | 2.3 | 0.8 | 0.8 | 6.7 | 2.3 | 900-1200 |
| Comparative Example 5 | 2.2 | 2.2 | 1.0 | 1.3 | 14.7 | 7.7 | 900-1200 |
| Comparative Example 6 | 2.3 | 2.2 | 1.1 | 1.3 | 11.3 | 6.0 | - |
| Comparative Example 7 | 3.0 | 2.7 | 1.4 | 1.4 | 14.3 | 7.0 | - |

[Table 4-2]

Film characteristics

| | Reflection band where reflectance is continuously 50% or more (wavelength 900-1200 nm) | Average reflectance at wavelength of 900-1200 nm | In-plane refractive index of surface | Defference in in-plane refractive indecies of A layer and B layer | Difference in refractive indeces perpendicular to plane between A layer and B layer | P-wave average reflectance at 60° (400-700nm) | Average transmittance at 10° (400-700 nm) | Internal haze |
|---|---|---|---|---|---|---|---|---|
| | nm | % | - | - | - | % | % | % |
| Comparative Example 1 | - | - | 1.73 | 0.17 | 0.07 | 1 | 90 | 0.2 |
| Comparative Example 2 | 900-1200 | 82 | 1.73 | 0.17 | 0.07 | 1 | 90 | 0.4 |
| Comparative Example 3 | 900-1200 | 81 | 1.73 | 0.17 | 0.07 | 0 | 90 | 0.4 |
| Comparative Example 4 | 900-1200 | 82 | 1.73 | 0.17 | 0.07 | 1 | 90 | 0.4 |
| Comparative Example 5 | 900-1000 | 50 | 1.66 | 0.09 | 0.07 | 0 | 91 | 0.4 |
| Comparative Example 6 | - | - | 1.66 | 0.02 | 0.13 | 24 | 87 | 0.5 |
| Comparative Example 7 | - | - | 1.66 | 0.02 | 0.10 | 19 | 87 | 0.5 |

| | Evaluation of laminates | | | | | | Head-up display evaluation |
|---|---|---|---|---|---|---|---|
| | 150°C | | | 120°C | | | |
| | Color Unevenness | Outer Appearance (primary orientation direction) | Outer Appearance (direction orthogonal to primary orientation direction) | Color Unevenness | Outer Appearance (primary orientation direction) | Outer Appearance (direction orthogonal to primary orientation direction) | |
| Comparative Example 1 | S | S | S | S | S | A | C |
| Comparative Example 2 | A | C | S | S | A | S | C |
| Comparative Example 3 | S | C | C | S | A | A | C |
| Comparative Example 4 | S | C | C | S | A | A | C |
| Comparative Example 5 | S | C | C | S | C | C | C |
| Comparative Example 6 | A | C | C | A | C | C | S |
| Comparative Example 7 | A | C | C | A | C | C | C |

INDUSTRIAL APPLICABILITY

The present invention is used for decorative materials such as decorative sheets, various home appliances, building members, automotive parts, etc., and can be used particularly as heat ray-shielding glass capable of suppressing the inflow of heat from sunlight.

**Claims**

1.  A laminated film having a configuration in which 51 or more layers of two or more different types of thermoplastic resin layers are regularly laminated, wherein when a highest glass transition temperature determined by differential scanning calorimetry (DSC measurement) is defined as TA, and a shrinkage onset temperature determined from a TMA curve in a primary orientation direction is defined as TX, said TX is lower than said TA by 5°C or more and 30°C or less.

2.  The laminated film according to claim 1, wherein under an atmosphere of said TA, a heat shrinkage rate in at least one of the primary orientation direction and a direction orthogonal to the primary orientation direction is 0.5% or more and 1.2% or less.

3.  The laminated film according to claim 1 or 2, wherein under an atmosphere of 150°C, a heat shrinkage rate in at least one of the primary orientation direction and a direction orthogonal to the primary orientation direction is 1.5% or more and less than 4.0%.

4.  The laminated film according to claim 1 or 2, comprising a layer containing, as a main component, a polyester having a naphthalene dicarboxylic acid unit as a main structural unit.

5.  The laminated film according to claim 1 or 2, wherein when a shrinkage onset temperature determined from a TMA curve in a direction orthogonal to the primary orientation direction is defined as TY, difference between said TY and said TX is 0°C or more and 10°C or less.

6. The laminated film according to claim 1 or 2, wherein said TY is lower than said TA by 5°C or more and 30°C or less.

7. The laminated film according to claim 1 or 2, wherein when average value of heat shrinkage rates at 150°C is defined as S(150) and average value of heat shrinkage rates at said TA is defined as S(TA), S(150)/S(TA) is 1.5 or more and 5.0 or less.

8. The laminated film according to claim 1 or 2, wherein when average value of heat shrinkage rates at 120°C is defined as S(120) and average value of heat shrinkage rates at said TA is defined as S(TA), S(120)/S(TA) is 1.5 or more and 5.0 or less.

9. The laminated film according to claim 1 or 2, comprising a reflection band having a width of 100 nm or more where a reflectance is 30% or more when light is incident on a film surface under conditions of an incident angle of 10° and a wavelength of 800 to 2000 nm.

10. The laminated film according to claim 1 or 2, wherein a P-wave average reflectance at a wavelength of 400 to 700 nm at an incident angle of 60° is 10% or more and 50% or less.

11. The laminated film according to claim 1 or 2, wherein an internal haze is 0.5% or less.

12. The laminated film according to claim 1 or 2, which is a film for laminated glass.

13. A laminate comprising a support 1, an intermediate layer 1, the laminated film according to claim 1 or 2, an intermediate layer 2, and a support 2 in this order.

14. A laminated glass, wherein the support 1 and the support 2 in the laminate according to claim 13 are both made of glass.

## INTERNATIONAL SEARCH REPORT

| International application No. |
| --- |
| **PCT/JP2024/032001** |

**A. CLASSIFICATION OF SUBJECT MATTER**

*B32B 27/00*(2006.01)i; *B32B 7/023*(2019.01)i; *B32B 27/36*(2006.01)i; *C03C 27/12*(2006.01)i; *G02B 5/08*(2006.01)i; *G02B 5/26*(2006.01)i

FI: B32B27/00 N; B32B7/023; G02B5/26; G02B5/08 A; C03C27/12 L; B32B27/36

According to International Patent Classification (IPC) or to both national classification and IPC

**B. FIELDS SEARCHED**

Minimum documentation searched (classification system followed by classification symbols)

B32B1/00-43/00; G02B5/00-5/136,5/20-5/28; C03C27/00-29/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-2307 A (TORAY INDUSTRIES, INC.) 05 January 2017 (2017-01-05) claims 1-6, 7, paragraph [0012], examples | 1-14 |
| A | WO 2013/137288 A1 (TORAY INDUSTRIES, INC.) 19 September 2013 (2013-09-19) claims 1-15, paragraphs [0011]-[0075] | 1-14 |
| A | JP 2017-206012 A (TORAY INDUSTRIES, INC.) 24 November 2017 (2017-11-24) entire document | 1-14 |
| A | JP 7332057 B1 (TORAY INDUSTRIES, INC.) 23 August 2023 (2023-08-23) entire document | 1-14 |
| A | JP 2005-186613 A (TORAY INDUSTRIES, INC.) 14 July 2005 (2005-07-14) entire document | 1-14 |
| A | JP 2021-54061 A (TORAY INDUSTRIES, INC.) 08 April 2021 (2021-04-08) entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 November 2024** | **03 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/032001**

| Patent document cited in search report | | | Publication date (day/month/year) | Patent family member(s) | | Publication date (day/month/year) |
|---|---|---|---|---|---|---|
| JP | 2017-2307 | A | 05 January 2017 | (Family: none) | | |
| WO | 2013/137288 | A1 | 19 September 2013 | US 2015/0064428 A1 | | |
| | | | | claims 1-15, paragraphs [0008]-[0091] | | |
| | | | | EP 2826621 A1 | | |
| | | | | CN 104185547 A | | |
| | | | | KR 10-2014-0141635 A | | |
| JP | 2017-206012 | A | 24 November 2017 | (Family: none) | | |
| JP | 7332057 | B1 | 23 August 2023 | WO 2023/054117 A1 | | |
| | | | | EP 4411436 A1 | | |
| | | | | CN 117897638 A | | |
| | | | | KR 10-2024-0087694 A | | |
| JP | 2005-186613 | A | 14 July 2005 | (Family: none) | | |
| JP | 2021-54061 | A | 08 April 2021 | (Family: none) | | |

Form PCT/ISA/210 (patent family annex) (July 2022)

**EP 4 778 719 A1**

**Patent documents cited in the description**

- JP 2010017854 A
- JP 2001310407 A
- WO 2005040868 A
- JP 2005059332 A
- JP 2004249587 A
- WO 2013137288 A
- JP 2007307893 A